# FASCICULE DE BREVET EUROPEEN

(11) **EP 2 331 236 B1**
(45) Date de publication et mention de la délivrance du brevet: **13.03.2019**
(21) Numéro de dépôt: 09752429.2
(22) Date de dépôt: 29.09.2009
(51) Int. Cl.: B01D 53/14, B01D 53/62, B01D 53/82, B01J 20/10, B01J 20/16, B01J 20/22, B01J 20/28, B01J 20/18, B01J 20/32

(54) **PROCEDE DE TRAITEMENT D'UN GAZ POUR DIMINUER SA TENEUR EN DIOXYDE DE CARBONE**
VERFAHREN ZUR BEHANDLUNG EINES GASES ZUR VERRINGERUNG DES KOHLENDIOXIDGEHALTS DES GASES
METHOD FOR TREATING A GAS TO REDUCE THE CARBON DIOXIDE CONTENT THEREOF

(30) Priorité: 30.09.2008 FR 0856617
(43) Date de publication de la demande: 15.06.2011
(73) Titulaire: Rhodia Opérations, 93306 Aubervilliers (FR)
(72) Inventeur: LAHARY, Pierre-Yves, F-69006 Lyon (FR); MIGNANI, Gérard, F-69008 Lyon (FR); VIOT, Jean-François, F-60300 Senlis (FR)
(74) Mandataire: Ferri, Isabella
(86) Numéro de dépôt international: PCT/FR2009/051851
(87) Numéro de publication internationale: WO 2010/037967

(56) Documents cités:
- WO-A-2004/054708
- WO-A-2008/021700
- FR-A- 2 905 628
- JP-A- 5 339 410
- US-A- 4 112 185
- YANG H ET AL: "Progress in carbon dioxide separation and capture: A review" JOURNAL OF ENVIRONMENTAL SCIENCES,, vol. 20, no. 1, 1 janvier 2008 (2008-01-01), pages 14-27, XP022936905 ISSN: 1001-0742 [extrait le 2008-01-01]

## Description

La présente invention a trait à un procédé de traitement d'un gaz contenant du dioxyde de carbone, par mise en contact avec un agent absorbant, qui permet de diminuer la teneur en dioxyde de carbone au sein du gaz traité. L'invention concerne aussi les agents absorbants spécifiques qui sont utilisés dans le cadre de ce procédé.

Le dioxyde de carbone (CO₂) est un gaz connu comme contribuant à l'effet de serre. Pour des raisons écologiques, on s'efforce de ce fait de plus en plus de limiter les rejets de ce gaz dans l'environnement. Cette problématique concerne tout particulièrement les installations industrielles dont l'activité engendre des effluents gazeux contenant du CO₂, comme par exemple les centrales thermiques, les turbines à gaz, les unités de raffinage de pétrochimie, les cimenteries ou bien encore les installations d'incinération de déchets.

On a développé différentes méthodes permettant de capter le CO₂ dans les effluents gazeux générés par ces industries, de façon à limiter le rejet de CO₂ dans l'atmosphère. Dans ce cadre, il a notamment été décrit des procédés permettant de capter le CO₂ dans des gaz qui mettent en oeuvre une absorption du CO₂ par voie gaz-liquide, à savoir par mise en contact du gaz contenant le CO₂ avec un liquide contenant un composé absorbant le CO₂. Ces procédés, qui mettent typiquement en oeuvre des amines en milieu solvant à titre d'absorbant du CO₂, ont notamment été préconisés pour le traitement des fumées émises par des installations industrielles, comme des turbines à gaz ou des chaudières. Ces procédés ne se révèlent pas entièrement satisfaisants, notamment compte tenu de l'instabilité des amines à haute température. En outre, le solvant employé (de l'eau typiquement) doit généralement être récupéré à l'issu du traitement (par évaporation le plus souvent), ce qui se répercute sur les coûts du procédé.

Il a par ailleurs été décrit des procédés mettant en oeuvre une absorption du CO₂ par voie gaz-solide, où, au lieu des absorbants liquides précités, on emploie des absorbants solides. Dans ce cadre, il a en particulier été décrit la mise en contact de gaz comprenant du CO₂ avec des solides à base de métaux alcalino-terreux (CaO ou BaO en particulier). Ces solides peuvent certes conduire à une capture relativement efficace du CO₂, mais celle-ci s'opère en consommant l'absorbant de manière irréversible et sans possibilité de relarguer le CO₂ fixé, ce qui conduit à la formation quantitative de sels qui ne peuvent généralement pas être valorisés, et qui nécessitent donc le plus souvent d'être stockés, ce qui se traduit en termes de coût et de répercussion sur l'environnement.

WO2008/021700 décrit un procédé de traitement d'un gaz contenant du CO₂ pour réduire la teneur en CO₂ au sein du dit gaz, dans lequel le gaz à traiter est mis en contact avec un absorbant qui comprend un agent de capture du CO₂, cet agent de capture du CO₂ étant supporté sur un matériau solide qui contient un polyol et un composé, par exemple nanosilice.

Un but de la présente invention est de fournir un nouveau moyen de traiter efficacement un gaz contenant initialement du dioxyde de carbone pour réduire la teneur en dioxyde de carbone au sein de ce gaz (voire absorber la totalité du CO₂ initialement présent dans le gaz), et qui permette avantageusement d'immobiliser le CO₂ sous une forme manipulable, et de préférence sous une forme à partir de laquelle on peut récupérer tout ou partie du CO₂ immobilisé.

A cet effet, selon un premier aspect, la présente invention fournit un nouveau procédé de traitement d'un gaz contenant du CO₂ pour réduire la teneur en CO₂ au sein de ce gaz, dans lequel le gaz à traiter est mis en contact avec un absorbant de type spécifique.

Cet absorbant spécifique, qui constitue un autre objet de la présente invention, comprend au moins un agent de capture du CO₂, cet agent de capture du CO₂ étant supporté sur un matériau (M) composite solide contenant :
- au moins un polymère (P), de préférence poreux ; et
- au moins un composé (C) choisi parmi les oxydes minéraux, les silico-aluminates et le charbon actif,
   où ledit matériau (M) a :
   - une taille médiane de particules (D50) d'au moins 100µm, plus préférentiellement d'au moins 150 µm, cette taille médiane de particule restant généralement inférieure ou égale à 2000 µm,
   - un volume poreux (Vd1), constitué par les pores de diamètre compris entre 3,6 et 1000 nm, d'au moins 0,2 cm³/g, et de préférence d'au moins 0,4 cm³/g.

Par *"agent de capture du CO₂*"*,* on entend, au sens de la présente invention, un composé ou un mélange de composés capable de réagir avec le CO₂ pour former, de préférence avec une cinétique élevée et de façon quantitative, un composé solide ou liquide (typiquement un sel de carbonate ou un adduit du CO₂ avec l'agent de capture).

A titre d'agents de capture du CO₂ bien adaptés selon l'invention, on peut notamment citer les monoamines (en particulier les amines secondaires, comme la diéthanol amine), les polyamines, les monoguanidines et les polyguanidines, et les mélanges de ces composés.

Des agents de capture du CO₂ aminés spécifiques envisageables selon l'invention sont :
- les alcoxysilanes aminés répondant à l'une des formules suivantes :

   (RO)_{α}(CH₃)_{β}Si-(CH₂)_{η}-NR^{ρ}R^{ξ} (RO)_{α}(CH₃)_{β}Si-(CH₂)_{η}-NH-(CH₂)_{µ}-NHR^{ρ}R^{ξ},.

   où :
   α et β sont deux nombres entiers tels que α+β=3 et α=1 ou 2 ;
   η et µ sont deux nombres entiers compris entre 1 et 18, par exemple entre 2 et 10 (par exemple η=3 et µ=2) ; et
   chacun des radicaux R^{ρ} et R^{ξ}, identiques ou différents, désigne -H ou un groupe hydrocarboné linéaire ou ramifié, saturé ou insaturé, éventuellement aromatique, typiquement un groupe alkyle, alcényle, aryle, arylalkyle ou alkylaryle ayant de 1 à 18 atomes de carbone (par exemple un groupe alkyle en C₁ à C₈).
- les dérivés phosphorylés de formule :

   (HO)₂(O)P-[A]-NR^{ρ}R^{ξ}

   où :
   -[A]- est une chaîne hydrocarbonée, linéaire ou ramifiée, saturée ou insaturée, éventuellement aromatique, éventuellement interrompue par un ou plusieurs hétéroatomes (S et/ou O par exemple), par exemple un groupe alkylène, alcénylène, arylène, arylalkylène ou alkylarylène, ayant de 1 à 18 atomes de carbone ; et
   chacun des radicaux R^{ρ} et R^{ξ}, identiques ou différents, désigne -H ou un groupe hydrocarboné linéaire ou ramifié, saturé ou insaturé, éventuellement aromatique, typiquement un groupe alkyle, alcényle, aryle, arylalkyle ou alkylaryle ayant de 1 à 18 atomes de carbone (par exemple un groupe alkyle en C₁ à C₈).

D'autres agents de capture du CO₂ utilisables sont les carbènes, les polyéthers, et les liquides ioniques propres à réagir avec le CO₂.

Dans le cadre de la présente invention, les inventeurs ont maintenant mis en évidence qu'on peut réduire efficacement la teneur en CO₂ dans un gaz contenant initialement du CO₂ en mettant en contact ce gaz avec un agent de capture de CO₂, notamment du type précité, spécifiquement à l'état supporté sur un matériau composite spécifique tel que défini ci-dessus. Dans ce cadre, la réduction de la teneur en CO₂ dans le flux s'opère selon un processus d'absorption du CO₂ de type solide-gaz qui s'avère particulièrement efficace, et ce notamment lorsque l'agent de capture du CO₂ présent sur le support est choisi parmi les agent de capture du CO₂ préférentiels décrits ci-dessus, en particulier les monoamines, les polyamines, les monoguanidines et les polyguanidines, les molécules porteuses d'hétérocycles azotés et les carbènes.

En outre, il s'avère que, le plus souvent, la capture du CO₂ opérée en employant un absorbant spécifique selon l'invention est réversible. En règle générale, il est possible, et ce par un simple traitement thermique de l'absorbant qui a été mis en contact avec le gaz à traiter, de relarguer le CO₂ et de récupérer l'absorbant, qui peut être à nouveau employé pour le traitement de gaz. Cette possibilité permet en particulier l'emploi de l'absorbant dans un cycle de traitement cyclique/ régénération, ce qui constitue un avantage notable par rapport aux absorbants de type BaO ou CaO cités plus haut.

Sans vouloir être lié à une théorie particulière, il semble pouvoir être avancé que les propriétés intéressantes qui ont été observées par les inventeurs en termes d'efficacité et de capacité d'absorption du CO₂ dans le cadre de la présente invention sont, au moins pour partie, liées à la porosité spécifique du matériau composite solide (M). Cette porosité semble conduire à une bonne accessibilité du CO₂ vers l'agent de capture imprégné. D'autre part, la porosité spécifique du matériau (M) conduit généralement à une protection de l'agent de capture vis-à-vis de la dégradation thermique, qui semble s'expliquer par une sorte d'effet de stabilisation protectrice de l'agent de capture au sein de l'environnement du matériau support.

Le plus souvent, le matériau (M) qui est utilisé selon l'invention à titre de support des agents de capture du CO₂ est un matériau qui présente une forte cohésion, ce qui se traduit le plus souvent par le fait que ce support (et donc l'absorbant le contenant) a une tendance au poussiérage très faible, voire nulle dans certains cas. Ce faible poussiérage fait du matériau support (M) un support de choix pour les agents de capture du CO₂ et permet la synthèse d'absorbants particulièrement bien adaptés à une mise en oeuvre dans un traitement de gaz. En effet, compte tenu du fait qu'il n'a pas tendance à générer des particules fines, le matériau support ne conduit pas à des phénomènes de pertes de charges ou de bouchage qui seraient rencontrés si on employait des agents absorbants poussiérants.

Dans ce cadre, il est avantageux que le matériau (M) qui est utilisé selon la présente invention ait une cohésion telle que son taux de particules de taille inférieure à 100 µm obtenu après une contrainte de pression d'air de 2 bars, typiquement selon le test décrit plus loin dans la présente description, est inférieur à 1,5 % en volume.

De façon avantageuse, on préfère par ailleurs que le matériau (M) ait un indice de cohésion IC_{N} supérieur à 0,40. L'indice de cohésion IC_{N} auquel il est fait référence ici correspond au rapport (taille médiane de particules en nombre après une contrainte de pression d'air de 4 bars) / (taille médiane de particules en nombre sans contrainte de pression d'air (0 bar)), qui est mesuré selon un autre test spécifique décrit dans la suite de la présente description.

Dans le cas le plus général, le matériau composite (M) qui est employé à titre de support dans l'absorbant de la présent invention comprend un polymère (P) ou plusieurs polymères de ce type ; et un composé (C) ou plusieurs composés de ce type. Selon un mode de réalisation particulier, le matériau support (M) est constitué uniquement par (i) un ou plusieurs polymères, de préférence poreux, incluant au moins le polymère (P) ; et (ii) un ou plusieurs composés choisi parmi les oxydes minéraux, les silico-aluminates et le charbon actif incluant au moins le composé (C).

Le polymère (P) qui est présent dans le matériau (M) utilisé à titre de support selon la présente invention est de préférence choisi parmi les polymères suivants : la cellulose et ses dérivés (comme par exemple l'acétate de cellulose ou le sulfate de cellulose) ; l'amidon et ses dérivés ; les alginates et leurs dérivés ; le polyéthylène ; les guars et les gommes de type gommes de guar, ainsi que leurs dérivés ; et les alcools polyvinyliques et leurs dérivés. Lorsque le polymère (P) est mis en oeuvre en association avec d'autres polymères, ces polymères additionnels sont de préférence choisis eux aussi parmi les polymères de la liste ci-dessus.

Typiquement, le polymère (P) peut être un des polymère ci-après : la cellulose, l'acétate de cellulose, le sulfate de cellulose, l'éthylcellulose ; la méthylcellulose ; l'hydroxyéthylcellulose ; l'hydroxyméthylcellulose ; la carboxyméthylcellulose ; l'amidon, l'amidon carboxyméthylé, l'hydroxypropyle d'amidon ; la gomme arabique ; l'agar-agar ; l'acide alginique, l'alginate de sodium ; l'alginate de potassium ; l'alginate de calcium ; la gomme adragante, la gomme de guar ; la gomme de caroube ; les polyvinyl acétates (éventuellement hydrolysés), les copolymères de polyvinyl acétates et d'esters vinyliques d'acides carboxyliques aliphatiques ; les alcools polyvinyliques ; le polyéthylène ; les copolymères d'éthylène et d'esters vinyliques d'acides carboxyliques saturés aliphatiques, le polycyclopentadiène hydraté.

Selon un mode de réalisation particulier, le polymère (P) est la cellulose ou un de ses dérivés (avantageusement l'acétate de cellulose ou le sulfate de cellulose), le polyéthylène, la gomme arabique, ou un alcool polyvinylique.

De façon avantageuse, le polymère (P) est un dérivé de la cellulose, de préférence l'acétate de cellulose, le sulfate de cellulose, l'éthylcellulose, l'hydroxyéthylcellulose, la méthylcellulose, l'hydroxyméthylcellulose, la carboxyméthylcellulose.

De manière particulièrement préférée, le polymère (P) est l'acétate de cellulose. L'acétate de cellulose employée peut notamment avoir un degré de substitution entre 1 et 3, par exemple entre 2 et 2,9, notamment de l'ordre de 2,5. Le degré de substitution d'une cellulose auquel il est fait référence ici correspond au nombre moyen de radicaux OH estérifiés par unité de cellulose, qui peut aller de 0 (pour une cellulose non substituée), à 3 (pour une cellulose totalement substituée).

Le composé (C) qui est présent dans le matériau support (M) utilisé selon la présente invention est de préférence un oxyde minéral. En particulier, le composé (C) peut comprendre une silice, ou bien un oxyde métallique tel qu'une alumine, un oxyde de zirconium, un oxyde de titane, ou un oxyde de fer. Selon un mode de réalisation spécifique, il peut s'agir d'un oxyde de terre rare, comme l'oxyde de cérium. A noter qu'il n'est pas besoin selon l'invention (même si cela est envisageable) que le matériau support (M) présente en lui-même (à savoir en l'absence de l'agent de capture du CO₂) des capacités d'absorption du CO₂.

Alternativement, le composé (C) peut être un silico-aluminate, ou bien un charbon actif (en particulier du charbon actif de noix de coco).

Selon un mode de réalisation possible, le matériau (M) peut comprendre un mélange de plusieurs composés choisis parmi les oxydes minéraux, les silico-aluminates et les charbons actifs, par exemple un mélange de silice (notamment de silice précipitée), et de charbon actif.

Selon une variante préférée de l'invention, le composé (C) présent dans le matériau (M) est une silice, par exemple une silice amorphe de synthèse. Il peut s'agir d'une silice précipitée, d'une silice pyrogénée, d'une silice colloïdale, d'un gel de silice, ou d'un mélange des silices précitées.

De façon particulièrement avantageuse, le composé (C) présent dans le matériau (M) est une silice précipitée. A titre non limitatif de silices précipitées intéressantes dans le cadre de la présente invention, on peut par exemple citer les silices de précipitation obtenues par réaction d'un silicate (typiquement un silicate de métal alcalin, comme le silicate de sodium), avec un agent acidifiant (acide sulfurique typiquement), généralement par addition d'agent acidifiant sur un pied de cuve de silicate, et/ou addition simultanée totale ou partielle d'agent acidifiant et de silicate sur un pied de cuve d'eau et de silicate. Cette réaction conduit à l'obtention d'une suspension de silice précipitée, à partir de laquelle on peut récupérer la silice précipité sous forme sèche, habituellement par séparation solide/liquide (par une filtration typiquement, qui conduit à un gâteau de filtration), et séchage (par exemple par atomisation).

Selon un mode de réalisation particulièrement intéressant, le polymère le polymère (P) est un dérivé de la cellulose, de préférence l'acétate de cellulose, et le composé (C) est une silice, de préférence une silice précipitée du type précité. Selon un mode de réalisation spécifique, le matériau (M) consiste en de l'acétate de cellulose et de la silice précipitée.

Quelle que soit la nature du polymère (P) et du composé (C), le matériau (M) utilisé à titre de support dans l'absorbant de l'invention est un matériau avantageusement poreux, qui a des caractéristiques spécifiques en termes de taille médiane de particule et de volume poreux.

La taille médiane de particules (notée D50) à laquelle il est fait référence dans la présente description peut typiquement être mesurée par diffraction laser selon la norme NF X 11-666, à l'aide d'un granulomètre du type MALVERN MASTERSIZER 2000 (de Malvern Instruments), en absence d'ultrasons et de dispersant, en utilisant comme liquide de mesure de l'eau déminéralisée dégazée (2 g d'échantillon étant dispersés dans 50 mL d'eau sous agitation magnétique) et la durée de la mesure étant de 5 secondes. La valeur retenue est la moyenne de trois mesures effectuées consécutivement sur le même échantillon.

En l'absence de précision, le terme "taille médiane de particules" ou "D50" s'entend de la taille de particule du matériau à pression atmosphérique, sans pression générant une contrainte sur le matériau. Des tailles médianes obtenues sous contrainte de pression sont notées "D50ₚ", où p désigne la pression à laquelle est soumise le matériau testé sous contrainte. Pour lever toute ambiguïté, la taille médiane de particules dite D50 mesurée sans contrainte de pression peut être notée D50_{0 bar}.

Le matériau support (M) de l'absorbant selon l'invention présente une taille médiane de particules (D50) supérieure ou égale à 100 µm, en général d'au moins 150 µm, et typiquement d'au moins 200 µm. De manière préférée, cette taille médiane de particules reste inférieure à 2000 µm. Elle est typiquement comprise entre 100 et 1000 µm, en particulier entre 200 et 1000 µm (entre 250 et 950 µm par exemple), notamment entre 200 et 950 µm (par exemple entre 250 et 900 µm).

Le plus souvent, la taille médiane de particules du matériau support (M) présente une taille médiane de particules supérieure à 250 µm et inférieure à 2000 µm, cette taille étant de préférence d'au moins 300 µm, avantageusement entre 300 µm et 1000 µm, cette taille étant plus préférentiellement d'au moins 400 µm.

Ainsi, selon un mode de réalisation particulier, la taille médiane de particules (D50) peut être comprise entre 400 et 2000 µm, en particulier entre 450 et 1200 µm, notamment entre 400 et 1000 µm. La taille médiane de particules (D50) est de préférence d'au moins 450 µm, par exemple d'au moins 500 µm, en particulier d'au moins 600 µm, cette taille pouvant par exemple être comprise entre 500 et 900 µm, notamment entre 540 et 900 µm, en particulier entre 540 et 800 µm.

En général, le matériau composite (M) présente des tailles de particules comprises entre 100 et 2000 µm, plus avantageusement entre 150 et 2000 µm notamment entre 200 et 1800 µm, par exemple entre 250 et 1500 µm, en particulier entre 400 et 800 µm, voire entre 500 et 800 µm.

Les volumes poreux et diamètres de pores auxquels il est fait référence dans la présente description sont ceux mesurés par porosimétrie au mercure, typiquement à l'aide d'un porosimètre Autopore MICROMERITICS 9520. En pratique, la mesure des volumes poreux et diamètres de pores est typiquement effectuée comme suit : chaque échantillon est préalablement séché pendant 2 heures à 90 °C, sous pression atmosphérique, puis placé dans un récipient à essai dans les 5 minutes suivant ce séchage et dégazé sous vide, par exemple à l'aide d'une pompe à vide ; les prises d'échantillon sont de 0,22 gramme (± 0,01 gramme) ; on emploie les pénétromètres n°10. Les diamètres de pores sont calculés par la relation de WASHBURN avec un angle de contact thêta égal à 140° et une tension superficielle gamma égale à 484 Dynes/cm. Pour la détermination des volumes poreux au sens de la présente description, ne sont pris en compte que les pores présentant un diamètre compris entre 3,6 et 1000 nm.

Le matériau support (M) présent dans l'absorbant de l'invention présente un volume poreux intra-particulaire (Vd1) constitué par les pores de diamètre compris entre 3,6 et 1000 nm (c'est-à-dire volume poreux cumulé des pores de diamètre compris entre 3,6 et 1000 nm), d'au moins 0,2 cm³/g, avantageusement d'au moins 0,3 cm³/g, et plus avantageusement encore d'au moins 0,35 cm³/g ce volume poreux restant habituellement inférieur ou égal à 3,0 cm³/g (la notation cm³/g s'entend ici en cm³ par gramme de matériau composite (M)).

De préférence, le volume poreux (Vd1) du matériau support (M) d'un absorbant selon l'invention est d'au moins d'au moins 0,4 cm³/g par exemple entre 0,4 et 2,0 cm³/g, notamment entre 0,45 et 1,5 cm³/g.

Notamment dans le cas où le composé (C) est de la silice (de préférence de la silice précipitée), le volume poreux (Vd1) du matériau (M) est avantageusement d'au moins 0,5 cm³/g, par exemple entre 0,5 et 3,0 cm³/g, notamment entre 0,5 et 2,0 cm³/g, typiquement entre 0,55 et 1,5 cm³/g. Notamment dans le cas où le composé (C) est de la silice (de préférence de la silice précipitée), le volume poreux (Vd1) du matériau composite (M) peut être d'au moins 0,6 cm³/g, en particulier compris entre 0,6 et 3,0 cm³/g, de préférence entre 0,6 et 2,0 cm³/g, par exemple entre 0,7 et 1,5 cm³/g, voire entre 0,7 et 1,4 cm³/g. De manière encore plus préférée, le volume poreux (Vd1) du matériau (M) est d'au moins 0,7 cm³/g, en particulier compris entre 0,7 et 2,0 cm³/g, notamment entre 0,75 et 1,5 cm³/g, par exemple entre 0,8 et 1,4 cm³/g. De manière encore plus préférée, le volume poreux (Vd1) du matériau composite (M) est d'au moins 0,8 cm³/g, en particulier compris entre 0,8 et 3,0 cm³/g, notamment entre 0,8 et 2,0 cm³/g, par exemple entre 0,9 et 1,4 cm³/g.

Notamment lorsque le composé (C) est de la silice, en particulier de la silice précipitée, les pores de diamètre compris entre 3,6 et 1000 nm présents au sein du matériau (M) présentent avantageusement un diamètre moyen de pores supérieur à 11 nm (par exemple compris entre 11 (non inclus) et 100 nm ou entre 11 (non inclus) et 50 nm). De préférence, ce diamètre moyen des pores de diamètre compris entre 3,6 et 1000 nm est d'au moins 11,5 nm, et plus avantageusement d'au moins 12 nm, par exemple entre 11,5 et 100 nm ; notamment entre 11,5 et 50 nm, en particulier entre 12 et 40 nm, notamment entre 12 et 40 nm, par exemple entre 12 et 25 nm ou entre 12 et 18 nm ; il peut également varier entre 13 et 40 nm, en particulier entre 13 et 25 nm, par exemple entre 13,5 et 25 nm, voire entre 13,5 et 18 nm.

Les propriétés de cohésion du matériau (M) peuvent notamment être mesurées en mettant en oeuvre le test de cohésion suivant.

On utilise un granulomètre laser du type MALVERN MASTERSIZER 2000 (de Malvern Instruments) couplé au module d'échantillonnage en voie sèche Scirocco. L'analyse est effectuée à l'aide du modèle optique Fraunhofer, avec un temps de mesure de 5 secondes.

Une première analyse est effectuée en introduisant le matériau testé uniquement par la vibration de la trémie et l'aspiration, afin d'avoir accès à une taille initiale du produit. Cette taille initiale du produit correspond à sa taille médiane de particules en nombre (la taille médiane de particule D50 _{0 bar} précitée), qui est également désignée par le terme de "taille médiane de particules en nombre sans contrainte de pression d'air".

Une deuxième analyse est effectuée en injectant une pression d'air, par l'intermédiaire de la buse du module d'échantillonnage, ce qui permet d'exercer une contrainte sur le matériau. Le taux d'éventuelles fines particules (particules de taille inférieure à 100 µm) générées par cette contrainte permet d'évaluer la cohésion (ou dureté) du produit (le matériau étant d'autant moins cohésif que la quantité de fines particules générés est élevée).

La pression d'air appliquée par l'intermédiaire de la buse du module d'échantillonnage lors de cette deuxième analyse peut par exemple être de 2 bars (c'est-à-dire 2.10⁵ Pa). Cette valeur de pression de 2 bars imposée est une valeur de référence, qui correspond à la valeur limite à partir de laquelle on commence à obtenir, pour un matériau exclusivement constitué de charbon actif, une contrainte conduisant à un début d'attrition.

Les mesures ci-dessous effectuées à 2 bars sur le charbon actif seul constituent les valeurs de référence vis-à-vis desquelles un matériau (M) selon l'invention peuvent être évalués (% en volume) :
taux de particules de taille inférieure à 100 µm = 2,0 %
taux de particules de taille inférieure à 20 µm = 0,0 %

Pour information, à 0 bar (c'est-à-dire sans pression d'air imposée) on obtient les mesures suivantes pour du charbon actif seul :
taux de particules de taille inférieure à 100 µm = 0,0 %
taux de particules de taille inférieure à 20 µm = 0,0 %

Alternativement ou en complément à l'analyse ci-dessus avec une pression d'air de 2 bars, on peut effectuer une deuxième analyse en appliquant une pression d'air de 4 bar (4.10⁵ Pa) par l'intermédiaire de la buse du module d'échantillonnage. Pour cette valeur de pression, on observe l'apparition de fines particules dans le cas d'un matériau constitué de granulés de charbon actif seul.

Le niveau d'attrition subi par le produit testé à cette pression de 4 bars peut être évalué par comparaison entre, d'une part, la répartition granulométrique mesurée sans contrainte de pression d'air (0 bar), et, d'autre part, la répartition granulométrique mesurée après une contrainte de pression d'air de 4 bars. Plus particulièrement, l'indicateur retenu pour la répartition granulométrique est la taille médiane de particules en nombre (D50ₚ précitée). Plus précisément, on observe la différence entre la taille médiane sans contrainte de pression (D50 _{0 bar}) et la taille médiane en nombre après une contrainte de pression d'air de 4 bars (D50 _{4 bar}). On définit dans ce cadre l'indice de cohésion IC_{N}, qui est calculé par le rapport D50 _{4 bar} / D50 _{0 bar} (c'est-à-dire au rapport (taille médiane de particules en nombre après une contrainte de pression d'air de 4 bars) / (taille médiane de particules en nombre sans contrainte de pression d'air)). Cet indice reflète la résistance à l'attrition présentée par le produit, c'est-à-dire sa cohésion : plus l'indice de cohésion IC_{N} est élevé, plus le produit résiste à l'attrition, c'est-à-dire plus le produit est cohésif.

Le matériau composite (M) employé selon l'invention présente avantageusement une force de cohésion telle que le matériau ne génère pas de poussière lors de sa manipulation. Notamment à cet effet, on préfère le taux de particules de taille inférieure à 100 µm obtenu après une contrainte de pression d'air de 2 bars, d'après le test de cohésion décrit ci-dessus, soit inférieur à 1,5 %, de préférence inférieur à 0,5 %.

En pratique, il est généralement intéressant d'employer un matériau composite (M) ayant un taux de particules de taille inférieure à 20 µm obtenu après une contrainte de pression d'air de 2 bars, d'après le test de cohésion décrit ci-dessus, égal à 0,0 % en volume.

Par ailleurs, il se révèle le plus souvent avantageux que le matériau composite (M) employé selon l'invention possède une cohésion telle que son indice de cohésion IC_{N} (rapport D50 _{4 bar} / D50 _{0 bar}, tel que mesuré dans les conditions définies ci-dessus) soit supérieur à 0,40, et plus préférentiellement encore supérieur à 0,50, plus avantageusement d'au moins 0,60, voire d'au moins 0,75. Par ailleurs, la taille médiane de particules en nombre après une contrainte de pression d'air de 4 bars (D50 _{4 bar}), telle qu'établie selon le test de cohésion décrit ci-dessus, est avantageusement supérieure à 350 µm, en particulier supérieure à 400 µm, par exemple supérieure à 500 µm.

De manière avantageuse, entre autres, lorsque le composé (C) est de la silice (de préférence de la silice précipitée), sa cohésion est telle que son indice de cohésion IC_{N}, est supérieur à 0,60, de préférence supérieur à 0,80, en particulier d'au moins 0,90.

Par ailleurs, il est généralement préférable que le matériau (M) présente un taux de particules de taille inférieure à 20 µm et un taux de particules de taille inférieure à 100 µm obtenus sans contrainte de pression d'air, d'après le test de cohésion décrit ci-dessus, qui sont tous deux égaux à 0,0 % en volume.

De manière avantageuse, et ce en particulier lorsque le composé (C) est de la silice notamment précipitée, la cohésion du matériau (M) est telle que son taux de particules de taille inférieure à 100 µm obtenu après une contrainte de pression d'air de 2 bars, d'après le test de cohésion décrit ci-dessus, est égal à 0,0 % en volume.

De bonnes propriétés de cohésion, conduisant à un poussiérage très restreint voire nul, sont en particulier obtenues lorsque le composé (C) est de la silice, notamment de la silice précipitée, et que le polymère (P) est un dérivé de cellulose, en particulier de l'acétate de cellulose.

Notamment lorsque le composé (C) est de la silice, en particulier de la silice précipitée, la densité de remplissage à l'état tassé (DRT), qui peut être mesurée selon la norme ISO 787/11, du matériau (M) peut être avantageusement d'au moins 0,30, par exemple supérieure à 0,32, typiquement comprise entre 0,33 et 0,35.

Quelles que soient sa nature exacte et ses propriétés de cohésion, le matériau support (M) présent dans les absorbants de l'invention possède habituellement une surface spécifique BET d'au moins 50 m²/g. En général, sa surface spécifique BET reste inférieure à 1300 m²/g, et en particulier d'au plus 1200 m²/g, notamment d'au plus 1000 m²/g, par exemple d'au plus 900 m²/g, voire d'au plus 700 m²/g (m² par gramme du matériau composite).

La surface spécifique BET à laquelle il est fait référence ici est déterminée selon la méthode de BRUNAUER - EMMETT - TELLER décrite dans "The journal of the American Chemical Society", Vol. 60, page 309, février 1938 et correspondant à la norme NF ISO 9277 (décembre 1996).

La surface spécifique BET du matériau (M) peut être d'au moins 100 m²/g, en général d'au moins 160 m²/g, de préférence d'au moins 200 m²/g (par exemple supérieure à 300 m²/g) ; elle peut être comprise entre 250 et 1300 m²/g, en particulier entre 280 et 1200 m²/g, par exemple entre 280 et 800 m²/g. Elle peut être également comprise entre 320 et 1000 m²/g, en particulier entre 320 et 900 m²/g, notamment entre 320 et 700 m²/g, voire entre 320 et 600 m²/g. Par exemple dans le cas où le composé (C) est de la silice, en particulier de la silice précipitée, la surface spécifique BET du matériau composite selon l'invention peut être comprise entre 200 et 800 m2/g, en particulier entre 200 et 600 m²/g, notamment entre 210 et 500 m²/g, notamment entre 210 et 400 m²/g (par exemple entre 210 et 300 m²/g).

La surface spécifique du matériau composite (M) est essentiellement fonction de la surface spécifique du composé (C), de la teneur en ledit composé (C) au sein du matériau (M) et de l'accessibilité à la surface du composé (C) au sein du matériau composite, que permet la porosité du polymère (P). Souvent, le matériau composite (M) conserve une grande partie (typiquement au moins 60 %) de la surface spécifique du composé (C). C'est tout particulièrement lorsque le composé (C) est de la silice (notamment précipitée) et que le polymère (P) est l'acétate de cellulose

Selon un mode de réalisation particulier de l'invention, adapté en particulier lorsque le composé (C) est de la silice (de préférence de la silice précipitée) et lorsque le polymère (P) est de l'acétate de cellulose, le matériau support (M) employé selon l'invention présente avantageusement :
- une taille médiane de particules (D50) d'au moins 300 µm (et ne dépassant typiquement pas 2000 µm), cette taille pouvant par exemple être comprise entre 400 et 1000 µm, notamment entre 500 et 1000 µm,
- une surface spécifique BET supérieure à 300 m²/g (et qui reste généralement inférieure ou égale à 1200 m²/g), cette surface spécifique pouvant en particulier être comprise entre 320 et 900 m²/g, notamment entre 320 et 700 m²/g, par exemple entre 320 et 500 m²/g, et typiquement entre 340 et 430 m²/g ; et
- une cohésion telle que son taux de particules de taille inférieure à 100 µm obtenu après une contrainte de pression d'air de 2 bars, selon le test de cohésion décrit ci-dessus, est égal à 0,0 % en volume.

Selon un autre mode intéressant de réalisation de l'invention, adapté en particulier lorsque le composé (C) est de la silice (de préférence de la silice précipitée) et lorsque le polymère (P) est de l'acétate de cellulose, le matériau support (M) employé selon l'invention présente avantageusement :
- une taille médiane de particules (D50) d'au moins 400 µm (et par exemple d'au plus 2000 µm), notamment comprise entre 400 et 1000 µm, par exemple entre 500 et 800 µm,
- une surface spécifique BET d'au moins 200 m²/g (et par exemple d'au plus 1000 m²/g), de préférence comprise entre 200 et 800 m²/g, en particulier entre 200 et 600 m²/g, notamment entre 200 et 500 m²/g, par exemple entre 200 et 400 m²/g, voire entre 210 et 400 m²/g ou entre 210 et 300 m²/g ; et
- une cohésion telle que telle l'indice de cohésion IC_{N} (rapport D50 _{4 bar} / D50 _{0 bar}, tel que mesuré dans les conditions définies ci-dessus) est supérieur à 0,60, en particulier supérieur à 0,80.

En général, le matériau composite (M) qui est utilisé à titre de support selon l'invention présente avantageusement une teneur en polymère (P) comprise entre 10 et 95% ; de préférence entre 15 et 45 %, en masse par rapport à la masse totale du matériau composite (M). La teneur en composé (C) dans le matériau composite (M) est quant à elle généralement comprise entre 5 et 90 %, de préférence entre 55 et 85 %, en masse par rapport à la masse totale du matériau composite (M).

Le matériau composite (M) qui est employé selon la présente invention peut se présenter notamment sous forme d'extrudés, par exemple cylindriques, ou, plus préférentiellement, sous forme de granulés, notamment sous la forme de granulés sensiblement sphéroïdaux.

Le matériau composite (M) mis en oeuvre selon l'invention, qui présente avantageusement les caractéristiques précitées, peut typiquement être obtenu selon un procédé comprenant les étapes (e1) à (e5) successives suivantes :
(e1) on forme une solution du polymère (P) dans un solvant (S), puis on ajoute le composé (C) à ladite solution, de préférence sous agitation (étant entendu que la solution du polymère (P) dans le solvant (S) peut éventuellement contenir au moins un autre polymère que le polymère (P), ce polymère étant avantageusement poreux, et que le composé (C) peut optionnellement être ajouté conjointement à au moins un autre composé choisi parmi les oxydes minéraux, les silico-aluminates et le charbon actif),
(e2) on met en forme le mélange obtenu dans l'étape (e1), de préférence par granulation ou par extrusion,
(e3) on introduit le produit mis en forme issu de l'étape (e2) dans un milieu liquide (NS) non-solvant du polymère (P) et au moins en partie miscible avec le solvant (S) utilisé dans la solution de polymère (P), ce par quoi on insolubilise le polymère (P),
(e4) on effectue au moins un lavage du produit obtenu à l'issue de l'étape (e3), pour éliminer, au moins en partie, le solvant utilisé dans la solution de polymère (P),
(e5) on sèche le produit solide issu de l'étape (e4).

Le composé (C) employé dans l'étape (e1) du procédé peut être choisi parmi les oxydes minéraux, les silico-aluminates et les charbons actifs. Le composé (C) peut par exemple être choisi parmi les adsorbants et supports de catalyseur. De préférence, il s'agit d'une silice, de préférence une silice de précipitation, obtenue typiquement par réaction d'un silicate (typiquement un silicate de métal alcalin, comme le silicate de sodium), avec un agent acidifiant (acide sulfurique typiquement), généralement par addition d'agent acidifiant sur un pied de cuve de silicate, et/ou addition simultanée totale ou partielle d'agent acidifiant et de silicate sur un pied de cuve d'eau et de silicate, ce qui permet d'obtenir une suspension de silice précipitée, ladite silice étant habituellement, séparée de la suspension, en particulier par filtration (avec obtention d'un gâteau de filtration), puis séchée (généralement par atomisation)..

Quelle que soit sa nature exacte, le composé (C) employé dans l'étape (e1) présente avantageusement une surface spécifique relativement élevée. Ainsi, il présente généralement une surface spécifique BET d'au moins 100 m²/g, de préférence d'au moins 200 m²/g, en particulier supérieure à 450 m²/g. La succession des étapes (e1) à (e5) précitées permet de conserver une bonne partie (généralement au moins 60%) de la surface spécifique du composé (C) dans le matériau composite support (M) synthétisé.

Par ailleurs, le composé (C) employé dans l'étape (e1) présente habituellement une taille médiane de particules d'au moins 0,5 µm, en particulier comprise entre 0,5 et 100 µm. Lorsque le composé (C) est de la silice précipitée, cette taille médiane de particules est de préférence plus particulièrement comprise entre 0,5 et 50 µm, notamment entre 0,5 et 20 µm, par exemple entre 2 et 15 µm.

En particulier lorsqu'il s'agit de silice, notamment de silice précipitée, le composé (C) utilisé dans l'étape (e1) du procédé selon l'invention, possède de préférence une prise d'huile DOP inférieure à 260 ml/100g, notamment inférieure à 240 ml/100g, par exemple inférieure à 225 ml/100g, cette prise d'huile pouvant être, dans certains cas, inférieure à 210 ml/100g, voire à 205 ml/100g. La prise d'huile DOP d'un composé (C) utilisé dans l'étape (e1) reste en général supérieure ou égale à 80 ml/g, et elle est typiquement supérieure à 145 ml/100g, par exemple supérieure à 180 ml/100g. La prise d'huile DOP à laquelle il est fait référence ici est celle déterminée selon la norme ISO 787/5 en mettant en oeuvre du dioctylphtalate (la mesure étant effectuée sur le composé (C) tel quel).

D'autre part, le composé (C) employé dans l'étape (e1) a de préférence une surface spécifique CTAB (surface externe déterminée selon la norme NF T 45007 (novembre 1987)) supérieure à 280 m²/g, notamment supérieure à 300 m²/g, en particulier supérieure à 330 m²/g, par exemple supérieure à 350 m²/g ; cette surface spécifique étant généralement inférieure ou égale 450 m²/g, en particulier lorsqu'il s'agit de silice, notamment de silice précipitée.

Le composé (C) mis en oeuvre dans l'étape (e1) présente de préférence un volume poreux (V_{d25}), formé par les pores de diamètre inférieur à 25 nm, supérieur à 0,8 ml/g, notamment supérieur à 0,9 ml/g (en particulier lorsqu'il s'agit d'une silice, notamment précipitée). Le volume poreux V_{d25} auquel il est fait référence ici correspond au diamètre déterminé par la méthode de Barett, Joyner et Halenda, dite méthode BJH, décrite notamment, par F. Rouquerol, L. Luciani, P. Llewwellyn, R. Denoyel et J. Rouquerol, dans « Les Techniques de l'Ingénieur », septembre 2001).

Par ailleurs, il est souvent avantageux que le composé (C) mis en oeuvre dans l'étape (e1) ait un diamètre de pores (dₚ), pour les pores de diamètre inférieur à 25 nm, pris au maximum de la distribution de taille de pores en volume, inférieur à 12,0 nm, en particulier inférieur à 8,0 nm (méthode de Barett, Joyner et Halenda).

A titre de composés (C) bien adaptés pour la mise en oeuvre de l'étape (e1), on peut citer les silices précipitées présentant les caractéristiques suivantes :
- une prise d'huile DOP inférieure à 260 ml/100g, notamment inférieure à 240 ml/100g, en particulier inférieure à 225 ml/100g ; et
- un volume poreux (V_{d25}), formé par les pores de diamètre inférieur à 25 nm, supérieur à 0,8 ml/g, notamment supérieur à 0,9 ml/g, par exemple d'au moins 0,95 ml/g (avantageusement associé à un diamètre de pores (dp), pour les pores de diamètre inférieur à 25 nm, pris au maximum de la distribution de taille de pores en volume, inférieur à 12 nm, en particulier inférieur à 8 nm) ; et
- une surface spécifique CTAB supérieure à 280 m²/g, notamment supérieure à 300 m²/g, en particulier supérieure à 330 m²/g, par exemple supérieure à 350 m²/g ; et
- de préférence, une surface spécifique BET supérieure à 450 m²/g, par exemple supérieure à 510 m²/g.

Une silice de précipitation de ce type peut par exemple être préparée par un procédé comprenant la réaction d'un silicate avec un agent acidifiant ; ce par quoi on obtient une suspension de silice précipitée, puis la séparation et le séchage (notamment par atomisation) de cette suspension, où la réaction du silicate avec l'agent acidifiant est de préférence réalisée selon les étapes successives suivantes :
(i) on forme un pied de cuve initial comportant seulement une partie de la quantité totale du silicate engagé dans la réaction, la concentration en silicate (exprimée en SiO₂) dans ledit pied de cuve initial étant comprise entre 10 et 50 g/L, de préférence entre 12 et 48 g/L, en particulier entre 15 et 45 g/L, et la température dudit pied de cuve initial étant comprise entre 40 et 65 °C,
   (i') éventuellement, on ajoute de l'agent acidifiant audit pied de cuve, pendant 5 à 30 minutes, jusqu'à l'obtention d'une valeur du pH du milieu réactionnel comprise entre 3,5 et 8,5.
(ii) on ajoute audit pied de cuve, de préférence de manière simultanée, de l'agent acidifiant et la quantité restante du silicate, pendant 20 à 150 minutes, le rapport quantité de silicate ajoutée (exprimée en SiO₂) / quantité de silicate présente dans le pied de cuve initial (exprimée en SiO₂) étant supérieur à 5 :
   a) soit à des débits constants conduisant à l'issue de cette addition simultanée à une valeur de pH du milieu réactionnel comprise entre 3,5 et 8,5,
   b) soit à un débit d'agent acidifiant régulé de manière à maintenir le pH du milieu réactionnel à une valeur constante et comprise entre 3,5 et 8,5,
(iii) dans le cas où la valeur du pH du milieu réactionnel à l'issue de l'étape (ii) est supérieure à 6,0, on ajoute au milieu réactionnel de l'agent acidifiant, pendant 3 à 25 minutes, de manière à atteindre une valeur de pH du milieu réactionnel comprise entre 3,5 et 6,0,
(iv) on maintient le milieu réactionnel, obtenu à l'issue de l'étape précédente, sous agitation pendant 5 à 60 minutes.

Quelle que soit sa nature exacte, le composé (C) mis en oeuvre dans l'étape (e1) peut être un composé fonctionnalisé, notamment par greffage ou adsorption de molécules organiques, comprenant par exemple au moins une fonction amino, phényle, alkyle, cyano, nitrile, alkoxy, hydroxy, amide, thio et/ou halogène.

Dans l'étape (e1) du procédé selon l'invention, on mélange le composé (C) avec une solution du polymère (P), de préférence sous agitation, ce qui permet de disperser le composé (C) (sous forme solide) dans un milieu formé du polymère (P) en solution dans le solvant (S). Selon un mode particulier, le mélange est réalisé en introduisant le composé (C) de manière progressive dans la solution du polymère (P), ce par quoi on obtient un mélange homogène. Pour la mise en oeuvre de l'étape (e1), on peut avantageusement employer ici un mélangeur de type granulateur, par exemple de type Rotolab Zanchetta.

A titre de solvant (S) dans l'étape (e1), on peut employer notamment de l'acide acétique (en particulier lorsque le polymère (P) est l'acétate de cellulose), de l'eau (en particulier dans le cas où le polymère (P) est le sulfate de cellulose, un alcool polyvinylique, ou la gomme arabique), ou bien encore une huile naphténique (en particulier dans le cas où le polymère (P) est le polyéthylène).

Lorsque le polymère (P) est l'acétate de cellulose, celui-ci est généralement mis en solution dans un mélange acide acétique + eau, par exemple dans les proportions suivantes (exprimées en masse par rapport à la masse totale de l'acétate de cellulose, de l'acide acétique et de l'eau) :
acétate de cellulose : 10 à 25 %
acide acétique : 65 à 80 %
eau : 5 à 15 %

A l'issue de l'étape (e1), il peut être avantageux de rajouter un solvant au mélange de polymère (P) et de composé (C) obtenu (par exemple d'acide acétique dans le cas où le polymère (P) est l'acétate de cellulose) ce qui permet notamment de diminuer la viscosité du mélange.

Les proportions de polymère (P) et de composé (C) mis en oeuvre dans l'étape (e1) dépendent des proportions souhaitées dans le matériau composite final. En général, dans le mélange réalisé dans l'étape (1), la teneur en polymère (P) comprise entre 10 et 95 %, de préférence entre 15 et 45 %, en poids, et une teneur en composé (C) comprise entre 5 et 90 %, de préférence entre 55 et 85 %, ces teneurs étant exprimées en masse par rapport à la masse totale de polymères et des composés de type oxydes minéraux, silico-aluminates et charbon actif au sein du mélange préparé dans l'étape (e1).

L'étape (e2) de mise en forme du mélange obtenu à l'issue de l'étape (e1) peut être effectuée par compactage (par exemple à l'aide d'une compacteuse Alexanderwerk).

Néanmoins, de préférence, l'étape (e2) est plutôt effectuée par granulation ou par extrusion.

Lorsqu'on met en oeuvre une granulation, celle-ci peut se dérouler en continu ou en discontinu, et le produit obtenu à l'issue de l'étape (e2) se présente sous la forme de granulés. La granulation est habituellement effectuée sous agitation et elle est typiquement réalisée à température ambiante (température du lieu de l'installation, par exemple entre 5 et 35°C).

La granulation peut être réalisée dans un granulateur mécanique à rotor, par exemple un granulateur à rotor équipé de socs de charrue, notamment un granulateur Lödige, à taux de cisaillement modéré. La granulation est de préférence réalisée dans un granulateur à taux de cisaillement élevé. On emploie de préférence un granulateur à rotor équipé de pales ou de broches, en particulier un granulateur Rotolab Zanchetta, qui fonctionne généralement en discontinu.

Avantageusement, lorsqu'on met en oeuvre une granulation dans l'étape (e2), il est préférable de remplir le bol (cuve) du granulateur à hauteur de 25 à 75 % de son volume par le mélange obtenu à l'issue de l'étape (e1), en particulier dans le cas d'un granulateur Rotolab Zanchetta. La vitesse du rotor du granulateur, en particulier dans le cas d'un granulateur Rotolab Zanchetta, peut être comprise entre 200 et 1000 tours/min, par exemple entre 400 et 600 tours/min.

Lorsqu'on met en oeuvre une extrusion dans l'étape (e2), celle-ci peut être une extrusion haute pression (par exemple au moyen d'un appareil type presse piston) ou une extrusion basse pression (par exemple au moyen d'un appareil type Fuji Paudal). Le produit mis en forme obtenu à l'issue de l'étape (e2) se présente alors sous la forme d'extrudés, généralement de forme cylindrique.

Optionnellement, à l'issue de l'étape (e2) et préalablement à l'étape (e3), on peut mettre en oeuvre une éventuelle étape de calibration et/ou de broyage, afin d'éliminer les éventuels produits n'ayant pas la taille désirée. Le procédé peut éventuellement comprendre en outre une étape de sphéronisation, de manière à augmenter le caractère sphéroïdal du produit.

Dans l'étape (e3) du procédé, on insolubilise (précipite) le polymère (P) en introduisant le produit issu de l'étape (e2) dans un liquide (NS) qui n'est pas un solvant du polymère (P). Ce non-solvant (NS) est au moins en partie, et de préférence totalement, miscible avec le solvant (S) utilisé dans la solution de polymère (P) mise en oeuvre dans l'étape (e1). L'insolubilisation du polymère (P) qui s'opère dans l'étape (e3) forme, à partir du polymère (P), une matrice solide poreuse dans laquelle le composé (C) se retrouve dispersé. L'étape (e3) est avantageusement réalisée sous agitation.

A titre de non-solvant (NS) dans l'étape (e3), on peut par exemple employer de l'eau, en particulier lorsque le polymère (P) est l'acétate de cellulose et le solvant employé l'acide acétique, ou bien encore une solution aqueuse diluée d'acide acétique (en particulier lorsque le polymère (P) est l'acétate de cellulose et le solvant employé l'acide acétique), l'éthanol (en particulier dans le cas où le polymère (P) est le sulfate de cellulose et le solvant employé l'eau), un acide carboxylique (en particulier dans le cas où le polymère (P) est un alcool polyvinylique et le solvant employé l'eau), un alcool (en particulier dans le cas où le polymère (P) est la gomme arabique et le solvant employé l'eau (chaude)), l'hexane (en particulier dans le cas où le polymère (P) est le polyéthylène et le solvant employé une huile naphténique).

Dans l'étape (e3), le non-solvant (NS) est avantageusement chauffé, typiquement à une température supérieure à 30°C, voire à 40°C chaud, préalablement à sa mise en contact avec le produit mis en forme obtenu dans l'étape (e2). Ainsi, par exemple, lorsque le polymère (P) est l'acétate de cellulose et que le non-solvant (NS) est l'eau, l'eau peut être employée à une température comprise entre 30 et 90 °C, en particulier entre 45 et 75°C, voire entre 50 et 70°C, et l'étape (e3) est typiquement conduite en introduisant le produit issu de l'étape (2) dans l'eau portée préalablement à la température précitée.

Dans l'étape (e3), on traite typiquement de l'ordre de 70 à 130 grammes de produit mis en forme issu de l'étape (e2) par litre de non solvant (NS), en particulier lorsque le non solvant est de l'eau.

Dans l'étape (e4) du procédé, on effectue un ou plusieurs lavages du produit obtenu à l'issue de l'étape (e3), afin d'éliminer, au moins en partie, et de préférence totalement, le solvant résiduel. Ce lavage peut être effectué avec de l'eau, notamment dans le cas où le solvant utilisé pour le polymère (P) est l'acide acétique. En général, préalablement à la mise en oeuvre de l'étape (e4), le produit obtenu à l'issue de l'étape (e3) est séparé du liquide utilisé dans l'étape (e3).

Après l'étape (e4), et préalablement à l'étape (e5), on peut optionnellement conduire une étape d'essorage (de préférence léger).

L'étape (e5) de séchage permet d'éliminer le liquide de lavage utilisé dans l'étape (e4). Notamment lorsque le liquide de lavage est de l'eau, et en particulier lorsque le polymère (P) est l'acétate de cellulose, l'étape (e5) de séchage peut avantageusement être effectuée à une température comprise entre 50 et 120°C, par exemple dans un dispositif ventilé (notamment étuve ou lit fluide), en général pendant 2 à 60 heures, en particulier entre 5 et 30 heures.

Le matériau composite obtenu à l'issue de l'étape (e5) présente typiquement des tailles de particules comprises entre 100 et 2000 µm, notamment entre 200 et 1500 µm, en particulier entre 200 et 800 µm, voire entre 400 et 800 µm. Optionnellement, après l'étape de séchage (e5), on peut conduire une étape de broyage et/ou de tamisage (séparation), afin d'éliminer les éventuels produits n'ayant pas la taille désirée, notamment selon les applications visées.

De même, de manière préférée, le procédé selon l'invention permet d'obtenir un matériau composite qui conserve une grande partie (par exemple au moins 60 %) de la surface spécifique du composé (C) utilisé, en particulier lorsque le polymère (P) est l'acétate de cellulose, notamment dans le cas où le composé (C) est du charbon actif et/ou surtout de la silice (de préférence de la silice précipitée).

Selon un autre mode de réalisation, qui se révèle souvent avantageux, le matériau composite (M) mis en oeuvre selon l'invention peut être obtenu sous la forme de particules (granulés typiquement), selon un procédé comprenant les étapes successives (ε1) à (ε51) suivantes :
(ε1) on introduit dans une extrudeuse :
   - le composé (C) ; et
   - une solution du polymère (P) dans un solvant (S),
   étant entendu que la solution du polymère (P) dans le solvant (S) peut éventuellement contenir au moins un autre polymère que le polymère (P), ce polymère étant avantageusement poreux, et que le composé (C) peut optionnellement être ajouté conjointement à au moins un autre composé choisi parmi les oxydes minéraux, les silico-aluminates et le charbon actif ;
(ε2) on fait migrer le mélange du polymère (P) et du composé (C) au sein de l'extrudeuse, vers une sortie de l'extrudeuse, l'extrudeuse étant munie, au niveau de cette sortie :
   - d'une plaque perforée de trou(s) ; et
   - de lames, situées entre ladite plaque perforée et ladite sortie de l'extrudeuse ,
   et ladite sortie munie débouchant dans un bain comprenant un liquide (NS) qui est non-solvant du polymère (P) et qui est au moins en partie miscible avec le solvant (S), dans lequel baignent lesdites lames,
   ce par quoi le mélange comprenant le polymère (P) et le composé (C), est forcé à passer au travers du ou des trou(s) de la plaque perforée puis est découpé par les lames, ce qui conduit à un fractionnement du courant du mélange comprenant le polymère (P) et le composé (C) sous forme de gouttes, les gouttes ainsi formées se retrouvant ainsi injectées dans le bain comprenant le liquide (NS) non-solvant où elles précipitent sous la forme de particules solides (granulés typiquement) ;
(ε3) les particules solides (de type granulés) synthétisés dans l'étape (ε2) sont séparées du bain comprenant le liquide (NS),
(ε4) les particules solides (de type granulés) ainsi séparées sont lavées pour éliminer, au moins en partie, le solvant (S) utilisé dans la solution de polymère (P) ; puis
(ε5) particules solides (ou granulés) sont séchées.

Le composé (C) employé dans l'étape (ε1) du procédé peut être choisi parmi les oxydes minéraux, les silico-aluminates et les charbons actifs. Le composé (C) peut par exemple être choisi parmi les adsorbants et supports de catalyseur. De préférence, il s'agit d'une silice, de préférence une silice de précipitation, obtenue typiquement par réaction d'un silicate (typiquement un silicate de métal alcalin, comme le silicate de sodium), avec un agent acidifiant (acide sulfurique typiquement), généralement par addition d'agent acidifiant sur un pied de cuve de silicate, et/ou addition simultanée totale ou partielle d'agent acidifiant et de silicate sur un pied de cuve d'eau et de silicate, ce qui permet d'obtenir une suspension de silice précipitée, ladite silice étant habituellement, séparée de la suspension, en particulier par filtration (avec obtention d'un gâteau de filtration), puis séchée (généralement par atomisation).

Quelle que soit sa nature, le composé (C) employé dans l'étape (ε1) présente avantageusement une surface spécifique relativement élevée. Il possède généralement, en particulier dans le cas d'une silice précipitée et/ou de charbon actif, une surface spécifique BET d'au moins 100 m²/g, de préférence d'au moins 200 m²/g, en particulier supérieure à 450 m²/g. La succession des étapes (ε1) à (ε5) précitées permet de conserver une bonne partie (généralement au moins 60%) de la surface spécifique du composé (C) dans le matériau composite support (M) synthétisé.

Le composé (C) employé dans l'étape (ε1) présente avantageusement au moins une et de préférence l'ensemble des caractéristiques préférentielles définies pour les matériaux (C) adapté à la mise en oeuvre de l'étape (e1) du procédé selon le mode de réalisation décrit plus haut dans la présente description, à savoir :
- une taille médiane de particules d'au moins 0,5 µm, en particulier comprise entre 0,5 et 100 µm (avantageusement comprise entre 0,5 et 50 µm, notamment entre 0,5 et 20 µm, par exemple entre 2 et 15 µm, lorsque le composé (C) est de la silice précipitée) ; et/ou
- en particulier lorsque le composé (C) est une silice, notamment une silice précipitée, une prise d'huile DOP inférieure à 260 ml/100g, notamment inférieure à 240 ml/100g, par exemple inférieure à 225 ml/100g, et qui peut être inférieure à 210 ml/100g, voire à 205 ml/100g, cette prise d'huile DOP étant en général supérieure ou égale à 80 ml/g, typiquement supérieure à 145 ml/100g, par exemple supérieure à 180 ml/100g ; et/ou
- une surface spécifique CTAB supérieure à 280 m²/g, notamment supérieure à 300 m²/g, en particulier supérieure à 330 m²/g, par exemple supérieure à 350 m²/g ; cette surface spécifique étant généralement inférieure ou égale 450 m²/g, en particulier lorsqu'il s'agit de silice, notamment de silice précipitée ; et/ou
- un volume poreux (V_{d25}), formé par les pores de diamètre inférieur à 25 nm, supérieur à 0,8 ml/g, notamment supérieur à 0,9 ml/g; et/ou
- un diamètre de pores (dₚ), pour les pores de diamètre inférieur à 25 nm, pris au maximum de la distribution de taille de pores en volume, inférieur à 12,0 nm, en particulier inférieur à 8,0 nm.

Ainsi, des composés (C) bien adaptés pour la mise en oeuvre de l'étape (e1) sont notamment les silices précipitées présentant les caractéristiques suivantes :
- une prise d'huile DOP inférieure à 260 ml/100g, notamment inférieure à 240 ml/100g, en particulier inférieure à 225 ml/100g ; et
- un volume poreux (V_{d25}), formé par les pores de diamètre inférieur à 25 nm, supérieur à 0,8 ml/g, notamment supérieur à 0,9 ml/g, par exemple d'au moins 0,95 ml/g ; et
- une surface spécifique CTAB supérieure à 280 m²/g, notamment supérieure à 300 m²/g, en particulier supérieure à 330 m²/g, par exemple supérieure à 350 m²/g ; et
- de préférence, une surface spécifique BET supérieure à 450 m²/g, par exemple supérieure à 510 m²/g.

Une silice de précipitation de ce type peut par exemple être préparée par un procédé comprenant la réaction d'un silicate avec un agent acidifiant ; ce par quoi on obtient une suspension de silice précipitée, puis la séparation et le séchage (notamment par atomisation) de cette suspension, où la réaction du silicate avec l'agent acidifiant est de préférence réalisée selon les étapes successives (i), (i'), (ii), (iii) et (iv) telles que définies plus haut dans la présente description.

Quelle que soit sa nature exacte, le composé (C) mis en oeuvre dans l'étape (e1) peut être un composé fonctionnalisé, notamment par greffage ou adsorption de molécules organiques, comprenant par exemple au moins une fonction amino, phényle, alkyle, cyano, nitrile, alkoxy, hydroxy, amide, thio et/ou halogène.

Dans l'étape (ε1), l'introduction du composé (C) et de la solution du polymère (P) dans l'extrudeuse conduit à la formation d'un mélange du composé (C) et du polymère (P) en solution au sein de l'extrudeuse, avantageusement sous la forme d'un mélange le plus homogène possible.

Selon une variante du procédé de l'invention, le composé (C) et la solution de polymère (P) peuvent être introduits de façon séparée dans l'extrudeuse, auquel cas leur mélange s'opère au sein de l'extrudeuse elle-même, notamment sous l'effet du mouvement de la ou des vis que comporte généralement l'extrudeuse.

Alternativement, selon une autre variante, le composé (C) et la solution de polymère (P) sont préalablement mélangés entre eux avant leur introduction dans l'extrudeuse. Dans ce cas, le pré-mélange du composé (C) et de la solution de polymère (P), s'effectue avantageusement par addition du composé (C) dans la solution de polymère (P), de préférence sous agitation. Le cas échéant, l'addition du composé (C) dans la solution de polymère (P) est avantageusement effectuée de manière progressive, notamment de manière à obtenir un mélange le plus homogène possible. Cette étape préalable préférée revient à disperser le composé (C) (sous forme solide) dans un milieu formé du polymère (P) en solution dans un de ses solvants. Avantageusement, le mélange préparé du composé (C) et de la solution de polymère (P) se présente sous forme d'une pâte homogène. Pour obtenir une telle pâte homogène, on peut typiquement employer un mélangeur à rotor équipé de pales ou de broches, par exemple de type Rotolab Zanchetta, ou, de préférence, un mélangeur à rotor équipé de socs de charrue, notamment un mélangeur de type Lödige, à taux de cisaillement modéré. Le mélange peut être réalisé à la température ambiante (température du lieu de l'installation, typiquement entre 5 et 35°C).

Le solvant (S) employé dans le cadre d'un procédé comprenant les étapes (ε1) à (ε5) précitée peut avantageusement être choisi parmi les solvants (S) préférentiels qui ont été définis plus haut dans la présente description dans le cadre du procédé comprenant les étapes (e1) à (e5).

Ainsi, en particulier, le solvant (S) mis en oeuvre dans le cadre des étapes (ε1) et (ε2) peut avantageusement être l'acide acétique (notamment lorsque le polymère (P) est l'acétate de cellulose), l'eau (en particulier dans le cas où le polymère (P) est le sulfate de cellulose, un alcool polyvinylique, ou la gomme arabique), ou une huile naphténique (en particulier dans le cas où le polymère (P) est le polyéthylène). Lorsque le polymère (P) mis en oeuvre dans le cadre des étapes (ε1) et (ε2) est l'acétate de cellulose, le solvant (S) est de préférence un mélange acide acétique + eau, la solution du polymère ayant alors typiquement les teneurs suivantes (exprimées en masse par rapport à la masse totale de l'acétate de cellulose, de l'acide acétique et de l'eau) :
acétate de cellulose : 10 à 25 %,
acide acétique : 65 à 80 %,
eau : 3 à 15 %.

Selon un mode de réalisation particulier, on rajoute un solvant au mélange de polymère (P) et de composé (C), ce qui permet notamment de diminuer la viscosité du mélange. Cet ajout de solvant (par exemple d'acide acétique dans le cas où le polymère (P) est l'acétate de cellulose) peut typiquement être effectué en ajoutant ledit solvant lors du mélange, après le mélange (typiquement lorsque le mélange est effectué préalablement à l'introduction dans l'extrudeuse), ou bien dans la solution de polymère (P) préalablement au mélange de la solution du polymère (P) avec le composé (C).

Les proportions de polymère (P) et de composé (C) dans le mélange dépendent des proportions souhaitées dans le matériau composite final. En général, la teneur en polymère (P) au sein du mélange comprise entre 10 et 95 %, de préférence entre 15 et 45 %, en poids, et une teneur en composé (C) comprise entre 5 et 90 %, de préférence entre 55 et 85 %, en poids par rapport à la masse totale du mélange.

De préférence, l'extrudeuse employée dans les étapes (ε1) et (ε2) est une extrudeuse à double vis (notamment en co-rotation), par exemple une extrudeuse du type Clextral BC21. La pression de travail de l'extrudeuse est alors généralement comprise entre 10 et 40 bars, par exemple entre 20 et 30 bars.

La plaque perforée présente au niveau de la sortie de l'extrudeuse qui est mis en oeuvre pour la granulation opérée dans l'étape (ε2) est munie d'un ou, de préférence, plusieurs trou(s) (notamment entre 1 et 200 trous, en particulier entre 20 et 200 trous, par exemple entre 30 et 180 trous). Le diamètre des trous présents sur la plaque peut varier typiquement entre 0,1 et 2 mm, en particulier entre 0,2 et 1 mm, par exemple entre 0,3 et 0,5 mm.

Bien que cela constitue une variante non préférée, les étapes (ε1) et (ε2) peuvent éventuellement être conduites en ne mettant pas en oeuvre une extrudeuse, mais un autre moyen permettant de pousser le mélange obtenu à partir du composé (C) et de la solution de polymère (P) au travers du ou des trous (par exemple un simple piston au sein d'une enceinte)

Les lames présentes en sortie de l'extrudeuse en aval de la plaque perforée sont typiquement des lames coupantes ou des couteaux. Ces lames équipent en général un granulateur placé à la sortie de l'extrudeuse (auquel cas la notion de "sortie de l'extrudeuse" au sens de la présente description englobe le granulateur). Les lames présentes au niveau de la sortie de l'extrudeuse peuvent typiquement être présentes à raison de 2 à10, notamment de 4 et 7. Il s'agit avantageusement de lames rotatives (lames coupantes ou couteaux rotatifs), dont la vitesse de rotation est alors typiquement comprise entre 2000 et 7500 tours/min, en particulier entre 3000 et 5000 tours/min.

Pour la mise en oeuvre de l'étape (ε2) la sortie de l'extrudeuse débouche dans un bain comprenant le liquide non-solvant (NS) et les lames présentes en sortie de l'extrudeuse sont immergées dans ce bain. La plaque perforée de trou(s) peut quant à elle être immergée, ou non, dans ce bain.

A titre de non-solvant (NS) dans l'étape (ε2), on peut notamment employer de l'eau (en particulier lorsque le polymère (P) est l'acétate de cellulose et le solvant employé l'acide acétique), ou bien encore une solution aqueuse d'acide acétique (en particulier lorsque le polymère (P) est l'acétate de cellulose et le solvant employé l'acide acétique), de l'éthanol (en particulier dans le cas où le polymère (P) est le sulfate de cellulose et le solvant employé l'eau), un acide carboxylique (en particulier dans le cas où le polymère (P) est un alcool polyvinylique et le solvant employé l'eau), un alcool (en particulier dans le cas où le polymère (P) est la gomme arabique et le solvant employé l'eau (chaude)), l'hexane (en particulier dans le cas où le polymère (P) est le polyéthylène et le solvant employé une huile naphténique). Il est particulièrement intéressant d'employer de l'eau à titre de liquide non solvant (NS).

Dans l'étape (ε2) le mélange de polymère (P) de solvant (S) et de composé (C) est fractionné en gouttes sous l'effet du passage dans le(s) trou(s) de la plaque perforée (assuré par la pression exercée à l'intérieur de l'extrudeuse) puis du découpage par les lames. Les gouttes ainsi formées sont converties en des particules solides (typiquement des granulés) de matériau composite. Plus précisément, sous l'effet d'une désolvatation obtenue lorsque les gouttes formées sont mises en contact avec le liquide non-solvant (NS), le polymère (P) précipite, ce par quoi on forme à partir du polymère matrice solide poreuse dans laquelle est dispersé le composé (C).

Pour réguler la formation des particules à partir des gouttes, selon un mode de réalisation particulier, on peut rajouter, au cours de l'étape (ε2), du liquide non-solvant (NS) additionnel et/ou un ou plusieurs polymères additionnels du type du polymère (P).

Le bain de non-solvant (NS) mis en oeuvre dans l'étape (ε2) n'est de préférence pas statique, et il consiste préférentiellement en un courant ou un flux de liquide non-solvant (NS). La vitesse du courant (ou flux) peut être par exemple comprise entre 5 et 20 L/min, notamment entre 8 et 15 L/min, en particulier pour un débit (de l'effluent) en sortie d'extrudeuse de 100 à 300 g/min, par exemple de 200 g/min.

Par ailleurs, notamment pour optimiser l'effet de désolvatation, il est souvent préférable que la température du bain de non-solvant (NS) mis en oeuvre dans l'étape (ε2) soit supérieure à celle du mélange de composé (C) et de polymère (P) qui est issu de l'extrudeuse. Ainsi, il est en général préférable qu'au moins au cours de l'étape (ε2), la température du bain comprenant le liquide non-solvant (NS), soit comprise entre 25 et 80 °C, en particulier entre 45 et 70 °C, par exemple entre 55 et 65 °C.

A l'issue de l'étape (ε2), on obtient un matériau composite (M) sous la forme d'une dispersion de particules solides poreuses dans un milieu liquide contenant le solvant (S) et le liquide non-solvant (S). Dans l'étape (ε3), ces particules solides de matériau composite (M) sont séparées du milieu liquide. Cette séparation solide/liquide peut être assurée par tout moyen connu de séparation ou de récupération. Ils sont par exemple récupérés au moyen d'un sac filtrant.

Dans l'étape (ε4), les particules solides de matériau composite (M) qui ont été récupérées dans l'étape (ε4), sont lavées (en un ou plusieurs lavages), afin d'éliminer, au moins en partie, et de préférence totalement, le solvant résiduel. Ce lavage peut être effectué avec de l'eau (par exemple par immersion dans de l'eau pendant plusieurs heures), notamment dans le cas où le solvant utilisé pour le polymère (P) est l'acide acétique. En général, préalablement à la mise en oeuvre de l'étape (ε4), le produit obtenu à l'issue de l'étape (ε3) est séparé du liquide utilisé dans l'étape (ε3).

Après l'étape (ε4), et préalablement à l'étape (ε5), on peut optionnellement conduire une étape d'essorage (de préférence léger), notamment afin d'éliminer le liquide de lavage utilisé dans l'étape (ε4).

L'étape (ε5) de séchage permet d'éliminer le liquide de lavage utilisé dans l'étape (ε4). Notamment lorsque le liquide de lavage est de l'eau, et en particulier lorsque le polymère (P) est l'acétate de cellulose, l'étape (ε5) de séchage peut avantageusement être effectuée à une température comprise entre 40 et 110°C, par exemple dans un dispositif ventilé (notamment étuve ou lit fluide), en général pendant 2 à 60 heures, en particulier entre 4 et 30 heures.

La succession des étapes (ε1) à (ε5) peut se dérouler en discontinu ou, de préférence, en continu. En particulier, il est préférable que la succession des étapes (ε1) et (ε2) se déroule en continu.

Il est à noter que le procédé décrit ci-dessus, qui comporte la succession des étapes (ε1) à (ε5), permet d'accéder de façon relativement simple et rapide à des granulés de matériau (M), et ce avec un nombre restreint d'étapes, en particulier lorsqu'il est conduit selon un mode continu. En effet, la synthèse de particules de type granulés s'opère très aisément : des gouttes de mélange (composé (C) + polymère (P) en solution) sont très simplement formées au passage dans le(s) trou(s) de la plaque perforée et découpées par les lames à la sortie de l'extrudeuse, et ces gouttes durcissent directement sous forme de particules (granulés typiquement) du fait de leur contact avec le milieu liquide non-solvant (NS), cette conversion s'effectuant sans collage entre les granulés en formation, et les particules formées pouvant ensuite être récupérées par de simples étapes de lavage et séchage. Ainsi, la succession des étapes (ε1) à (ε5) permet d'obtenir de façon simple et directe des granulés ayant une taille prédéfinie, et ce sans nécessiter aucune étape de calibration, tamisage et/ou broyage.

Dans l'absorbant utilisé dans le cadre de la présente invention, un matériau composite (M) tel que défini ci-dessus est utilisé à titre de support d'au moins un agent de capture du CO₂.

L'agent de capture de CO₂ qui est présent à l'état supporté dans un absorbant selon l'invention comprend avantageusement au moins un composé choisi parmi les monoamines, les polyamines, les monoguanidines, et les polyguanidines, de préférence présentant un pKa supérieur à 12.

A titre indicatif d'agents de capture de CO₂ adaptés dans le cadre de la présente invention, on peut notamment citer :
- la monoéthanolamine H₂N-(CH₂)₂-OH (dite MEA), seule ou en mélange avec de la pipérazine ;
- la diéthanolamine HN[(CH₂)₂-OH]₂ (dite DEA) ;
- la tétraéthylènepentamine ;
- les polyamines, de préférence celles ayant une masse moléculaire en poids M_{W} comprise entre 800 et 750 000 ;
- les composés hyperbranchés résultant de l'addition d'alcoxysilanes aminés avec de l'aziridine ;
- les polyguanidines, de préférence ayant un pKa supérieur à 12, avantageusement les polyguanidines de formule suivante : 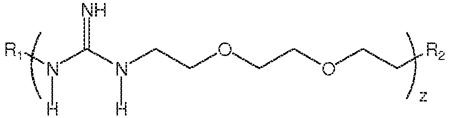 où z est typiquement compris entre 1 et 4 ;
- les polysacharides aminés tels que, par exemple la chitine ;
- la choline, avantageusement en mélange avec de l'urée ;
- les polyamidines, de préférence ayant un pKa supérieur à 12, avantageusement les polyamidines répondant à la formule suivante : 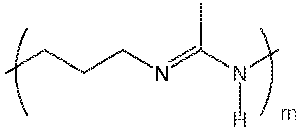 où z est typiquement compris entre 1 et 4.

Plus généralement, on peut employer dans le cadre de la présente invention d'autres type d'agents de capture de CO₂, sous réserve qu'ils puissent être supportés sur un matériau composite (M) tel que défini plus haut dans la présente description. A titre d'exemple l'agent de capture de CO₂ peut comprendre un composé choisi parmi :
- les polyéthers, notamment les polyéthers répondant à l'une des formules ci-dessous :

   R^{a}(-CH₂-CH₂-O-)x-R^{b}

   R^{a}(-CH₂-CH(CH₃)-O-)y-R^{b}

   R^{a}(-CH₂-CH₂-O-)z(-CH₂-CH(CH₃)-O-)z'-R^{b}

   où :
   chacun des groupes R^{a} et R^{b}, identique ou différent, désigne un groupe alkyle, aryle ou arylalkyle (comprenant typiquement de 1 à 10 atomes de carbone) ; et
   x, y, z et z' sont des nombres entiers allant de 1 à 100, et de préférence inférieurs à 50, la somme z+z' étant avantageusement inférieure à 100, plus préférentiellement inférieure à 50.
- des liquides ioniques, comme par exemple ceux comprenant des acides aminés tétraphosphonium, des sels de méthylimidazolium ou de méthylimidazolium (notamment associés à des contre-ions de type chlorures, bromures et les sels des anions PF₆⁻ ou BF₄⁻), ou des composés ioniques répondant à l'une des formules suivantes :

   (R^{c})₄P⁺ X⁻

   (R^{c})₄N⁺ X⁻

   où :
   chacun des 4 groupes Rc, identiques ou différents, désigne un groupe alkyle, aryle ou arylalkyle (comprenant typiquement de 1 à 10 atomes de carbone) ; et
   X⁻ désigne un anion, de préférence Cl⁻, Br⁻, PF₆⁻ ou BF₄⁻.
- les carbènes.

Au sens de la présente description, le terme "carbène" s'entend d'une espèce chimique comprenant un carbone divalent porteur de deux électrons non liants, ce carbone divalent étant typiquement porteur de 6 électrons de valence et non porteur d'une charge électrique. A titre de carbènes utilisables dans le cadre de la présente invention, on peut notamment citer les carbènes dits N-hétérocycliques (dits "NHC") ou les carbènes à motif alkylaminocyclique, dits CAAC (pour l'anglais "Cyclic AlkylAminoCarbene"), du type de ceux décrits par exemple dans WO 2006/138166, où le mode de préparation de ces composés est décrit.

Selon un mode de réalisation envisageable lorsqu'un carbène est utilisé à titre d'agent de capture du CO₂ selon l'invention, celui-ci peut être formé *in situ* à partir d'un précurseur de carbène. Dans ce cadre spécifique, l'absorbant selon l'invention est obtenu *in situ* à partir d'un précurseur d'absorbant comprenant ledit précurseur de carbène supporté sur le matériau composite (M). Des précurseurs de carbènes utilisables à cet effet sont en particulier:
- les adduits de carbène et d'alcool, du type ceux décrits par exemple dans J. Am. Chem. Soc., vol. 127, p. 9079, (2005) ou les carbènes sous forme dimérisée, du type décrits, par exemple, dans Angew. Chem. Int. Ed. vol 112, p. 541 (2000), qui libèrent des carbènes lorsqu'ils sont traités thermiquement ;
- les sels d'imidazolium (notamment carboxylate, sulfate, hydrogénosulfate, sulfonate, phosphate, hydrogénophosphate, halogénure, perchlorate ou borate), tels que ceux décrits notamment dans WO97/34875, US 2005/0249925, WO 2005016941, ou US 7,109,348, qui forment un carbène par réaction avec une base.

Quelle que soit sa nature exacte, l'agent de capture du CO₂ est généralement présent dans l'absorbant selon l'invention en une teneur comprise entre 0,5 et 75 % en masse par rapport à la masse totale de l'absorbant, cette teneur en agent de capture du CO₂ au sein de l'absorbant étant avantageusement d'au moins 5% en masse et plus préférentiellement d'au moins 10% en masse, et plus avantageusement encore d'au moins 25% en masse, la capacité d'absorption du CO₂ étant généralement d'autant plus élevée que la teneur en l'agent de capture est élevée. Bien que des résultats intéressants en termes d'extraction du CO₂ soient obtenus y compris pour des faibles teneur en agent de capture (par exemple entre 0,5 et 25% en masse), la teneur en agent de capture du CO₂ au sein de l'absorbant selon l'invention est plus avantageusement supérieure à 25% en masse, par exemple comprise entre 25 et 75% en masse, notamment entre 30 et 60%, par exemple entre 40 et 55 % en masse, par rapport à la masse totale de l'absorbant.

L'agent de capture du CO₂ présent dans l'absorbant selon l'invention peut typiquement être introduit sur le matériau (M) par imprégnation, selon toute méthode d'imprégnation connue en soi. Il est à souligner à ce sujet que le matériau (M) employé dans le cadre de la présente invention présente de très bonnes propriétés d'absorption, qui permettent de l'imprégner de façon aisée et efficace par la plupart des agents de capture de CO₂.

Une imprégnation de l'agent de capture du CO₂ sur le matériau (M) peut notamment être réalisée selon une voie de type hétérogène, à savoir par mise en contact direct de l'agent de capture du CO₂ sur le matériau composite (M), typiquement en mélangeant l'agent et le matériau composite à l'état de poudre.

Alternativement, une telle imprégnation peut aussi être obtenue selon une voie de type plus homogène, à savoir en mettant en contact l'agent de capture du CO₂ et le matériau composite (M) au sein d'un solvant. Le cas échéant, ce solvant peut être choisi parmi les solvants organiques aprotiques tels que le toluène, le dichlorométhane, le xylène, ou le THF.

Pour réaliser l'imprégnation, on peut aussi employer l'agent de capture du CO₂ à l'état liquide (par exemple en solution dans un solvant si requis) et l'imprégner par pulvérisation sur le matériau (M) dans un mélangeur, par exemple un mélangeur en V avec un axe intérieur rotatif, muni de plaques au travers desquelles est pulvérisé l'agent de capture du CO₂ à l'état liquide et sur lesquelles sont avantageusement fixés des couteaux émotteurs. Notamment lorsque l'agent de capture du CO₂ à l'état liquide présente une viscosité relativement importante, il peut avantageusement être chauffé (par exemple entre 40 et 90°C, notamment entre 50 et 85°C), ce qui peut permettre d'améliorer sa fluidité et, partant, l'efficacité de l'imprégnation.

Les absorbants spécifiques de la présente invention, qui comprennent l'agent de capture du CO₂ à l'état supporté sur le matériau composite (M) s'avèrent particulièrement efficaces pour réduire la teneur en CO₂ au sein d'un effluent gazeux.

Le procédé de traitement de gaz de l'invention employant ces absorbants spécifiques peut être employé pour le traitement de tout gaz contenant du CO₂, notamment pour le traitement de flux issus de centrales thermiques, de turbines à gaz, d'unités de raffinage de pétrochimie, de cimenteries, ou d'unités d'incinération de déchets.

En règle générale, la teneur en CO₂ dans un gaz traité selon l'invention (à savoir le gaz qui est destiné à être traité selon l'invention et qui est soumis au traitement selon l'invention) peut varier en une assez large mesure et elle est de préférence comprise entre 1 et 30% en masse, par exemple entre 7 et 25% en masse.

Le procédé de traitement de l'invention peut être effectué selon tout moyen connu en soi pour mettre en contact le gaz à traiter et l'absorbant comprenant l'agent (A) de capture du CO₂ imprégné sur le matériau support (M).

De préférence, dans le procédé de l'invention, la mise en contact du gaz à traiter et de l'absorbant est réalisée en utilisant l'absorbant sous la forme d'un lit fixe au travers duquel on fait passer le gaz à traiter. L'absorbant selon l'invention se révèle particulièrement adapté à ce mode de réalisation. A ce sujet, les résultats des travaux qui ont été conduits par les inventeurs indiquent en particulier que les pertes de charge obtenues dans le flux gazeux passant à travers le lit fixe sont acceptables, et que l'absorbant employé n'a pas tendance à former de fines.

Alternativement, la mise en contact du gaz à traiter et de l'absorbant peut aussi être réalisée en utilisant l'absorbant sous forme d'un lit fluidisé (et ce d'autant plus que la taille médiane de particules D50 du matériau (M) est faible) ou sous la forme d'un lit transporté (en particulier la cinétique de la réaction du CO₂ et de l'agent de capture du CO₂ est rapide).

En règle générale, le traitement du gaz contenant le CO₂ selon le procédé de l'invention est de préférence effectué en mettant en contact l'absorbant et le support à une température T1 comprise entre 10 et 100°C, par exemple entre 25 et 90°C, typiquement à une température inférieure à 80°C, voire inférieure à 50°C, par exemple à température ambiante (notamment entre 10 et 30°C).

Dans la plupart des cas, la capture du CO₂ telle qu'obtenue à la température T1 précitée est réversible, à savoir qu'on peut le plus souvent récupérer le CO₂ en traitant thermiquement l'absorbant ayant capté le CO₂, typiquement en le soumettant à une température T2 de relargage du CO₂ supérieure àT1, avantageusement d'au moins 20°C, la différence entre les deux températures (T2-T1) étant typiquement comprise entre 20 et 50°C.

Ainsi, selon un mode de réalisation particulier, le procédé de la présente invention comprend :
- une première étape, dans laquelle on met en contact le gaz à traiter contenant le CO₂ et l'absorbant tel que défini ci-dessus à une première température T1 comprise entre 10 et 100°C, par exemple entre 25 et 90°C (typiquement à une température inférieure à 80°C, voire inférieure à 50°C, par exemple à température ambiante et notamment entre 10 et 30°C), ce par quoi au moins une partie du CO₂ présent dans le gaz est capté par l'absorbant ; puis
- une deuxième étape, où, à partir de l'absorbant ayant capté le CO₂ obtenu dans la première étape, on récupère un flux gazeux comprenant du CO₂, en soumettant cet absorbant ayant capté le CO₂ à une deuxième température T2 supérieure à la première température T1, cette deuxième température T2 étant généralement comprise entre 50 et 180°C, typiquement entre 80 et 150°C, la différence de température (T2-T1) étant avantageusement comprise entre 20 et 50°C.

Selon ce mode de réalisation, on obtient, dans la première étape, l'appauvrissement en CO₂ recherché selon l'invention (ce qui permet typiquement d'envisager le rejet du gaz ainsi traité dans l'atmosphère). Par ailleurs, lors de la mise en oeuvre de la deuxième étape, tout ou partie du CO₂ qui a été absorbé par l'absorbant dans la première étape est relargué hors de cet absorbant sous l'effet du traitement thermique. On libère ainsi un flux gazeux comprenant du CO₂, généralement un flux de CO₂ particulièrement pur comprenant typiquement au moins 95% en masse, voire au moins 98% en masse de CO₂ Cette libération est le plus souvent réalisée hors du gaz traité, de façon à obtenir un flux de gaz comprenant du CO₂ (généralement essentiellement constitué de CO₂, le gaz libéré contenant typiquement du CO₂ en une teneur de l'ordre d'au moins 95%, voire au moins 98%), séparé du flux de gaz traité appauvri en CO₂.

En d'autres termes, ce mode de réalisation particulier permet d'obtenir deux flux gazeux séparés à partir d'un gaz contenant initialement du CO₂, à savoir:
(i) un premier flux contenant le gaz traité appauvri en CO₂ (obtenu dans la première étape) ; et
(ii) un deuxième flux contenant du CO₂ (obtenu dans la deuxième étape)

Le flux gazeux (ii) contenant du CO₂ qui est obtenu par traitement thermique de l'absorbant est généralement très riche en CO₂, et il est le plus souvent essentiellement constitué de CO₂ (il s'agit typiquement d'un flux gazeux comprenant au moins 90% en masse, le plus souvent au moins 95% en masse, voire au moins 98% en masse de CO₂).

Ce flux (ii) riche en CO₂ peut notamment être mis en oeuvre dans des réactions avec des composés nucléophiles ou électro-donneurs (réactifs organométalliques de type réactifs de Grignard, eau, alcoolates, aminés ...), dans des réactions avec du méthanol pour la synthèse du diméthylcarbonate, ou avec des éthers pour la synthèse de dialkylcarbonates, ou bien, plus généralement, dans toute réaction impliquant le CO₂ telle que décrite dans Chem. Rev. , vol. 107, pp. 2365-2387 (2007). Dans ce cadre, il est avantageux d'employer le CO₂ immédiatement après sa libération à partir de l'absorbant.

Le mode de réalisation de l'invention mettant en oeuvre les deux étapes précitées de mise en contact du gaz à traiter contenant le CO₂ et l'absorbant ; puis de récupération du CO2 par traitement thermique de l'absorbant ayant réagi peut avantageusement être mis à profit pour fournir un flux gazeux riche en CO₂ à partir d'un gaz ayant une teneur plus faible en CO₂. Typiquement, on peut par exemple traiter dans la première étape un gaz comprenant initialement de 1 à 30 % en masse, de préférence de 7 à 25 % en masse de CO₂, ce par quoi on génère un flux gazeux comprenant au moins 95 % en masse de CO₂, voire au moins 99% en masse de CO₂.

L'exemple qui suit est donné à titre illustratif et non restrictif de la présente invention.

### EXEMPLE

### Amine (MEA) supportée sur un composite silice/acétate de cellulose

Dans cet exemple, on a synthétisé un absorbant selon l'invention comprenant de la monoéthanolamine (MEA) à titre d'agent de capture de CO₂.

Cette monoéthanolamine a été imprégnée sur un matériau composite (M1) comprenant 70% en masse d'acétate de cellulose et 30% en masse de silice, se présentant, avant imprégnation, sous la forme d'une poudre ayant les caractéristiques ci-dessous :

| | |
|---|---|
| - taille médiane de particules (D50) | 568 µm |
| - volume poreux Vd1 (volume des pores ayant un diamètre compris entre 3,6 et 1000 nm) | 1 cm³/g |
| - indice de cohésion IC_{N} (rapport D50 _{4 bar} / D50 _{0 bar}) | 0,81 |
| - diamètre moyen de pores ayant un diamètre compris entre 3,6 et 1000 nm | 14,5 nm |
| - surface BET | 283 m²/g |
| - DRT | 0,35 |

Ce matériau composite (M1) a été préparé dans les conditions ci-dessous :
On a préparé une solution (S1) d'acétate de cellulose dans l'acide acétique (comprenant en masse : 18% d'acétate de cellulose, 76% d'acide acétique et 6% d'eau). L'acétate de cellulose utilisé a un degré de substitution de 2,5.

On a réalisé un mélange homogène de 5271 g de cette solution (S1) et 2360 g d'une silice de précipitation ayant les caractéristiques suivantes :

| | |
|---|---|
| - surface spécifique BET | 563m²/g |
| - prise d'huile DOP | 244 ml/100g |
| - humidité (selon la norme ISO787/2 - 105°C - 2 heures) | 7,6% en masse |
| - pH | 6,9 |
| - teneur massique en sels hydrosolubles | 0,8% |

Le mélange de la solution (S1) et de la silice a été effectué dans un mélangeur à soc de charrue ("plough share mixer" Lödige) d'une capacité de 20 L dans les conditions suivantes :
- introduction de la totalité de la solution (S1) dans le mélangeur
- mise en marche du mélangeur (vitesse de rotation : 50 tours/min)
- introduction progressive de la silice (durée d'addition : 2 minutes 30)
- maintien de l'agitation durant 5 minutes (vitesse de rotation : 50 tours/min)
- maintien de l'agitation avec augmentation de la vitesse de rotation jusqu'à obtention du couple maximum accepté par le mélangeur (vitesse de rotation : 150 tours/min pendant 4 minutes 30)

On a ainsi obtenu un mélange sous la forme d'une pâte homogène.

On a ajouté 5% en masse d'acide acétique (pureté 99.9%) à la pâte et on a malaxé le mélange à la main jusqu'à absorption totale de l'acide.

Par trois fois, on a introduit une masse de 1 kg du mélange obtenu à l'issu du malaxage dans une extrudeuse au moyen d'une presse hydraulique (*Clextral BC21* d'une longueur de 90 cm, munie uniquement des éléments de la vis de transport, et mise en oeuvre à une vitesse de 80 tours par minute). L'extrudeuse a été employée sans moyen de régulation de température, une élévation de la température s'opérant d'elle-même sous l'effet des frottements. A la sortie de l'extrudeuse, un système de granulation (*Laboratory Pelletizer Unit 5* - LPU - Gala) a été installé, muni d'une tête de granulation à 7 couteaux, et on a fait passé sous pression l'extrudat sortant de l'extrudeuse à travers une plaque comprenant 120 trous de filière (trous de 0,5 mm à 70°C), à un débit de 200 g/min.

La tête de granulation, située à la sortie des trous de filière est placée dans un bain de précipitation contenant de l'eau à titre de milieu de précipitation. Cette tête, munie de 7 coteaux, a été mise en rotation à une vitesse ajustée à 5000 tours par minute. On a fait circuler au niveau de cette tête de l'eau portée à 60°C à titre de milieu de précipitation, avec un débit de 12 L/ min. Chaque minute, 1 litre du bain de précipitation a été remplacé par 1 L d'eau de renouvellement, portée à 60 °C.

On a ainsi obtenu des granulés de composite sous forme, qu'on a collecté dans un filet puis stocké une nuit dans de l'eau avant de les sécher dans la zone de séchage du LPU à 60°C.

Le séchage a été conduit jusqu'à obtention d'une masse constante, ce par quoi on a obtenu le matériau composite (M1).

L'imprégnation de l'éthanolamine sur le matériau composite (M1) a été conduite dans un mélangeur en V de 7 litres de marque Patterson Kelley, muni de plaques au travers desquelles est pulvérisée l'éthanolamine et sur lesquelles sont fixés des couteaux émotteurs, ce mélangeur en V tournant à 20 tours par minutes, avec un axe intérieur tournant à 1900 tours par minute. On a chargé 800 g du matériau composite (M1) dans le mélangeur, puis on a pulvérisé 531,3 g de MEA à une température de 20 °C sur ce matériau composite pendant 10 minutes. On a maintenu l'agitation pour homogénéiser durant 5 minutes supplémentaires.

On a ainsi obtenu un absorbant selon l'invention, constitué à 42,5% en masse par l'agent de capture de CO₂ (MEA) et à 57,5 % en masse par le matériau composite (M1). Cet absorbant présente une DRT égal à 0,60.

Cet absorbant se révèle bien adapté pour l'extraction de CO₂ dans un flux gazeux. Au contact avec un flux gazeux contenant le CO2, la MEA supportée capte le CO₂ en formant un sel qui reste localisé sur la surface de l'absorbant (carboxylate d'ammonium). Par simple chauffage de l'absorbant, on relargue le CO₂ à partir du sel, ce par quoi on régénère l'absorbant, tout en obtenant un dégagement de CO2 de pureté élevée.

## Revendications

1. Procédé de traitement d'un gaz contenant du CO₂ pour réduire la teneur en CO₂ au sein dudit gaz, dans lequel le gaz à traiter est mis en contact avec un absorbant qui comprend au moins un agent de capture du CO₂, cet agent de capture du CO₂ étant supporté sur un matériau (M) composite solide qui contient :
- au moins un polymère (P), et
- au moins un composé (C) choisi parmi les oxydes minéraux, les silico-aluminates et le charbon actif,
ledit matériau (M) ayant :
- une taille médiane de particules D50 supérieure ou égale à 100 µm,
- un volume poreux Vd1, constitué par les pores de diamètre compris entre 3,6 et 1000 nm, d'au moins 0,2 cm³/g.

2. Procédé selon la revendication 1, où le matériau (M) a une cohésion telle que son taux de particules de taille inférieure à 100 µm obtenu après une contrainte de pression d'air de 2 bars est inférieur à 1,5 % en volume.

3. Procédé selon l'une quelconque des revendications 1 et 2, où le matériau (M) a un indice de cohésion IC_{N}, calculé par le rapport de la taille médiane de particules en nombre après une contrainte de pression d'air de 4 bars à la taille médiane de particules en nombre sans contrainte de pression d'air, supérieur à 0,40.

4. Procédé selon l'une quelconque des revendications 1 à 3, où le polymère (P) est choisi parmi la cellulose et ses dérivés ; l'amidon et ses dérivés ; les alginates et leurs dérivés ; le polyéthylène ; les guars et les gommes de type gommes de guar, ainsi que leurs dérivés ; et les alcools polyvinyliques et leurs dérivés.

5. Procédé selon l'une quelconque des revendications 1 à 4, où le composé (C) est un oxyde minéral, de préférence une silice.

6. Procédé selon l'une quelconque des revendications 1 à 5, où le matériau (M) consiste en de l'acétate de cellulose et de la silice précipitée.

7. Procédé selon l'une quelconque des revendications 1 à 6, où le matériau (M) présente:
- une taille médiane de particules D50 d'au moins 300 µm, par exemple entre 400 et 1000 µm ;
- une surface spécifique BET supérieure à 300 m²/g ; et
- une cohésion telle que son taux de particules de taille inférieure à 100 µm obtenu après une contrainte de pression d'air de 2 bars est égal à 0,0 % en volume.

8. Procédé selon l'une quelconque des revendications 1 à 6, où le matériau (M) présente :
- une taille médiane de particules D50 d'au moins 400 µm ;
- une surface spécifique BET d'au moins 200 m²/g ; et
- un indice de cohésion IC_{N}, calculé par le rapport de la taille médiane de particules en nombre après une contrainte de pression d'air de 4 bars à la taille médiane de particules en nombre sans contrainte de pression d'air, supérieur à 0,60.

9. Procédé selon l'une des revendications 1 à 8, où, dans le matériau (M), la teneur en polymère (P) est comprise entre 10 et 95% en masse et la teneur en composé (C) est comprise entre 5 et 90 % en masse, par rapport à la masse totale du matériau composite (M).

10. Procédé selon l'une des revendications 1 à 8, où l'agent de capture de CO₂ comprend au moins un composé choisi parmi les monoamines, les polyamines, les monoguanidines, et les polyguanidines, de préférence présentant un pKa supérieur à 12.

11. Procédé selon l'une des revendications 1 à 8, où l'agent de capture de CO₂ comprend un carbène.

12. Procédé selon l'une des revendications précédentes, qui comprend
- une première étape dans laquelle on met en contact le gaz à traiter contenant le CO₂ et l'absorbant, à une première température T1 comprise entre 10 et 100°C, ce par quoi au moins une partie du CO₂ présent dans le gaz est capté par l'absorbant ; puis
- une deuxième étape où on relargue le CO₂ capté par l'absorbant en soumettant l'absorbant ayant capté le CO₂ à une deuxième température T2 supérieure à la première température T1, cette deuxième température T2 étant comprise entre 50 et 180°C, la différence de température (T2-T1) étant comprise entre 20 et 50 °C.

13. Absorbant adapté à la mise en oeuvre du procédé de l'une des revendications 1 à 12, qui comprend au moins un agent de capture du CO₂ choisi parmi les monoamines, les polyamines, les monoguanidines et les polyguanidines, cet agent de capture étant imprégné sur un support formé par un matériau (M) composite solide qui contient :
- au moins un polymère (P) ; et
- au moins un composé (C) choisi parmi les oxydes minéraux, les silico-aluminates et le charbon actif,
ledit matériau (M) ayant :
- une taille médiane de particules inférieure ou égale à 100 µm,
- un volume poreux (Vd1), constitué par les pores de diamètre compris entre 3,6 et 1000 nm, d'au moins 0,2 cm³/g.

14. Utilisation d'un absorbant selon la revendication 13 pour effectuer une absorption de CO₂, notamment pour réduire la teneur en CO₂ dans un gaz contenant du CO₂.

15. Utilisation selon la revendication 14 où l'absorbant est employé pour diminuer la teneur en CO₂ dans des flux issus de centrales thermiques, de turbines à gaz, d'unités de raffinage de pétrochimie, de cimenteries, ou d'unités d'incinération de déchets.

## Patentansprüche

1. Verfahren zum Behandeln eines Gases, das CO₂ enthält, um den CO₂-Gehalt in dem Gas zu verringern, wobei das zu behandelnde Gas mit einem Absorptionsmittel in Kontakt gebracht wird, das mindestens ein CO₂-Abfangmittel umfasst, wobei dieses CO₂-Abfangmittel auf einem festen Verbundmaterial (M) geträgert ist, das enthält :
- mindestens ein Polymer (P) und
- mindestens eine Verbindung (C), ausgewählt aus anorganischen Oxiden, Aluminiumsilicaten und Aktivkohle,
wobei das Material (M) aufweist :
- eine mittlere Teilchengröße D50 von größer oder gleich 100 µm,
- ein Porenvolumen Vd1, bestehend aus Poren mit einem Durchmesser zwischen 3,6 und 1000 nm, von mindestens 0,2 cm³/g.

2. Verfahren nach Anspruch 1, wobei das Material (M) eine solche Kohäsion aufweist, dass sein Gehalt an Teilchen, die kleiner als 100 µm sind, erhalten nach einer Luftdruckbelastung von 2 bar, kleiner als 1,5 Vol.-% ist.

3. Verfahren nach einem der Ansprüche 1 und 2, wobei das Material (M) einen Kohäsionsindex IC_{N}, berechnet aus dem Verhältnis der zahlenmittleren Teilchengröße nach einer Luftdruckbelastung von 4 bar zur zahlenmittleren Teilchengröße ohne Luftdruckbelastung, größer als 0,40 aufweist.

4. Verfahren nach einem der Ansprüche 1 bis 3, wobei das Polymer (P) ausgewählt ist aus Cellulose und ihren Derivaten; Stärke und ihren Derivaten; Alginaten und ihren Derivaten; Polyethylen; Guaren und Gummis vom Typ Guargummi sowie deren Derivaten; und Polyvinylalkoholen und deren Derivaten.

5. Verfahren nach einem der Ansprüche 1 bis 4, wobei die Verbindung (C) ein anorganisches Oxid, vorzugsweise eine Kieselsäure, ist.

6. Verfahren nach einem der Ansprüche 1 bis 5, wobei das Material (M) aus einem Celluloseacetat und aus Fällungskieselsäure besteht.

7. Verfahren nach einem der Ansprüche 1 bis 6, wobei das Material (M) aufweist :
- eine mittlere Teilchengröße D50 von mindestens 300 µm, zum Beispiel zwischen 400 und 1000 µm;
- eine spezifische Oberfläche nach BET größer 300 m²/g; und
- eine solche Kohäsion, dass sein Gehalt an Teilchen, die kleiner als 100 µm sind, erhalten nach einer Luftdruckbelastung von 2 bar, gleich 0,0 Vol.-% ist.

8. Verfahren nach einem der Ansprüche 1 bis 6, wobei das Material (M) aufweist :
- eine mittlere Teilchengröße D50 von mindestens 400 µm;
- eine spezifische Oberfläche nach BET von mindestens 200 m²/g; und
- einen Kohäsionsindex IC_{N}, berechnet aus dem Verhältnis der zahlenmittleren Teilchengröße nach einer Luftdruckbelastung von 4 bar zur zahlenmittleren Teilchengröße ohne Luftdruckbelastung, größer als 0,60.

9. Verfahren nach einem der Ansprüche 1 bis 8, wobei in dem Material (M) der Gehalt an Polymer (P) im Bereich zwischen 10 und 95 Gew.-% liegt und der Gehalt an Verbindung (C) im Bereich zwischen 5 und 90 Gew.-% liegt, bezogen auf das Gesamtgewicht des Verbundmaterials (M).

10. Verfahren nach einem der Ansprüche 1 bis 8, wobei das CO₂-Abfangmittel mindestens eine Verbindung umfasst, ausgewählt aus Monoaminen, Polyaminen, Monoguanidinen und Polyguanidinen, vorzugsweise mit einem pKa von mehr als 12.

11. Verfahren nach einem der Ansprüche 1 bis 8, wobei das CO₂-Abfangmittel ein Carben umfasst.

12. Verfahren nach einem der vorhergehenden Ansprüche, das umfasst :
- einen ersten Schritt, wobei das zu behandelnde Gas, das CO₂ enthält, und das Absorptionsmittel bei einer ersten Temperatur T1 im Bereich zwischen 10 und 100 °C in Kontakt gebracht werden, wodurch mindestens ein Teil des im Gas vorhandenen CO₂ vom Absorptionsmittel abgefangen wird; dann
- einen zweiten Schritt, wobei das vom Absorptionsmittel abgefangene CO₂ freigesetzt wird, indem das Absorptionsmittel, das das CO₂ abgefangen hat, einer zweiten Temperatur T2 ausgesetzt wird, die größer als die erste Temperatur T1 ist, wobei diese zweite Temperatur T2 zwischen 50 und 180 °C liegt, wobei die Temperaturdifferenz (T2-T1) im Bereich zwischen 20 und 50 °C liegt.

13. Absorptionsmittel, das für die Durchführung des Verfahrens nach einem der Ansprüche 1 bis 12 geeignet ist, das mindestens ein CO₂-Abfangmittel umfasst, ausgewählt aus Monoaminen, Polyaminen, Monoguanidinen und Polyguanidinen, wobei dieses Abfangmittel auf einen Träger imprägniert ist, der aus einem festen Verbundmaterial (M) ausgebildet ist, das enthält :
- mindestens ein Polymer (P) und
- mindestens eine Verbindung (C), ausgewählt aus anorganischen Oxiden, Aluminiumsilicaten und Aktivkohle,
wobei das Material (M) aufweist :
- eine mittlere Teilchengröße kleiner oder gleich 100 µm,
- ein Porenvolumen (Vd1), bestehend aus Poren mit einem Durchmesser zwischen 3,6 und 1000 nm, von mindestens 0,2 cm³/g.

14. Verwendung eines Absorptionsmittels nach Anspruch 13, zum Bewirken einer CO₂-Absorption, insbesondere zur Verringerung des CO₂-Gehalts in einem Gas, das CO₂ enthält.

15. Verwendung nach Anspruch 14, wobei das Absorptionsmittel verwendet wird, um den CO₂-Gehalt in Abströmen zu verringern, die aus Wärmekraftwerken, Gasturbinen, petrochemischen Raffinerieanlagen, Zementanlagen oder Müllverbrennungsanlagen stammen.

## Claims

1. Process for treating a gas containing CO₂ in order to reduce the CO₂ in said gas, in which the gas to be treated is brought into contact with an absorbent which comprises at least one CO₂-capturing agent, this CO₂-capturing agent being supported on a solid composite material (M) which contains :
- at least one polymer (P), and
- at least one compound (C) chosen from mineral oxides, silico-aluminates and active carbon,
said material (M) having :
- a median particle size D50 of greater than or equal to 100 µm,
- a pore volume Vd1, constituted by the pores with a diameter of between 3.6 and 1000 nm, of at least 0.2 cm³/g.

2. Process according to Claim 1, wherein the material (M) has a cohesion such that its content of particles having a size of less than 100 µm, obtained after an air pressure stress of 2 bar, is less than 1.5% by volume.

3. Process according to either one of Claims 1 and 2, wherein the material (M) has a cohesive index CI_{N}, calculated by the ratio of the number of median particle size after an air pressure stress of 4 bar to the number of median particle size without air pressure stress, of greater than 0.40.

4. Process according to any one of Claims 1 to 3, wherein the polymer (P) is chosen from cellulose and derivatives thereof; starch and derivatives thereof; alginates and derivatives thereof; polyethylene; guars and gums of guar gum type, and also derivatives thereof; and polyvinyl alcohols and derivatives thereof.

5. Process according to any one of Claims 1 to 4, wherein the compound (C) is a mineral oxide, preferably a silica.

6. Process according to any one of Claims 1 to 5, wherein the material (M) consists of cellulose acetate and precipitated silica.

7. Process according to any one of Claims 1 to 6, wherein the material (M) has :
- a median particle size D50 of at least 300 µm, for example between 400 and 1000 µm;
- a BET specific surface area of greater than 300 m²/g; and
- a cohesion such that its content of particles of less than 100 µm in size, obtained after an air pressure stress of 2 bar, is equal to 0.0% by volume.

8. Process according to any one of Claims 1 to 6, wherein the material (M) has :
- a median particle size D50 of at least 400 µm;
- a BET specific surface area of at least 200 m²/g; and
- a cohesive index CI_{N}, calculated by the ratio of the number median particle size after an air pressure stress of 4 bar to the number median particle size without air pressure stress, of greater than 0.60.

9. Process according to one of Claims 1 to 8, wherein, in the material (M), the polymer (P) content is between 10% and 95% by weight and the compound (C) content is between 5% and 90% by weight, relative to the total weight of the composite material (M).

10. Process according to one of Claims 1 to 8, wherein the CO₂-capturing agent comprises at least one compound chosen from monoamines, polyamines, monoguanidines, and polyguanidines, preferably having a pKa greater than 12.

11. Process according to one of Claims 1 to 8, wherein the CO₂-capturing agent comprises a carbene.

12. Process according to one of the preceding claims, which comprises
- a first step in which the gas to be treated containing the CO₂ is brought into contact with the absorbent at a first temperature T1 of between 10 and 100°C, in return for which at least one portion of the CO₂ present in the gas is captured by the absorbent; then
- a second step wherein the CO₂ captured by the absorbent is released by subjecting the absorbent having captured the CO₁ to a second temperature T2 greater than the first temperature T1, this second temperature T2 being between 50 and 180°C, the difference in temperature (T2-T1) being between 20 and 50°C.

13. Absorbent suitable for carrying out the process of one of Claims 1 to 12, which comprises at least one CO₂-capturing agent chosen from monoamines, polyamines, monoguanidines and polyguanidines, this capturing agent being impregnated onto a support made of a solid composite material (M) which contains:
- at least one polymer (P); and
- at least one compound (C) chosen from mineral oxides, silico-aluminates and active carbon,
said material (M) having :
- a median particle size of less than or equal to 100 µm,
- a pore volume (Vd1), consisting of the pores having a diameter of between 3.6 and 1000 nm, of at least 0.2 cm³/g.

14. Use of an absorbent according to Claim 13, for carrying out a CO₂ absorption, in particular for reducing the CO₂ content in a gas containing CO₂.

15. Use according to Claim 14, wherein the absorbent is used to decrease the CO₂ content in streams from thermal power plants, from gas turbines, from petrochemical refining units, from cement plants, or from waste incineration units.
